# EUROPEAN PATENT APPLICATION

(11) **EP 4 622 191 A1**
(43) Date of publication of application: **24.09.2025**
(21) Application number: 22965458.7
(22) Date of filing: 15.11.2022
(51) Int. Cl.: H04L 27/00

(54) **CELL CHANGE FAILURE PROCESSING METHOD AND DEVICE, COMMUNICATION DEVICE, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN); WU, Yumin, Beijing 100085 (CN)
(74) Representative: Stöckeler, Ferdinand
(86) International application number: PCT/CN2022/132100
(87) International publication number: WO 2024/103267

(57) **Abstract**

The present invention relates to a cell change failure processing method and device, a communication device, and a storage medium. The cell change failure processing method comprises: determining a change failure of at least one cell; and performing connection recovery. According to the present invention, when determining a change failure of at least one cell, a terminal may perform connection recovery to recover the connection between the terminal and the cell, thereby ensuring that the terminal can continue to keep communication, and avoiding communication interruption caused by no connected cell due to the change failure of at least one cell.

## Description

### TECHNICAL FIELD

The disclosure relates to the field of communication technology, in particular to a method for cell switch failure processing, an apparatus for cell switch failure processing, a communication device and a computer readable storage medium.

### BACKGROUND

In some scenarios, a terminal may perform cell switch. However, due to various factors, an operation of the cell switch is not guaranteed to be successful, and there may be a situation where the cell switch fails.

### SUMMARY

To solve technical problems in related arts, embodiments provide a method for cell switch failure processing, an apparatus for cell switch failure processing, a communication device and a computer readable storage medium.

According to a first aspect of embodiments of the disclosure, a method for cell switch failure processing is proposed. The method is performed by a terminal, and includes: determining a failure of at least one cell switch; and performing connection recovery.

According to a second aspect of embodiments of the disclosure, a method for cell switch failure processing is proposed. The method is performed by a network device, and includes: performing connection recovery with a terminal in a case where the terminal has a failure of at least one cell switch.

According to a third aspect of embodiments of the disclosure, an apparatus for cell switch failure processing is proposed. The apparatus includes: a processing module, configured to determine a failure of at least one cell switch; and a connecting module, configured to perform connection recovery.

According to a fourth aspect of embodiments of the disclosure, an apparatus for cell switch failure processing is proposed. The apparatus includes: a connecting module, configured to: perform connection recovery with a terminal in a case where the terminal has a failure of at least one cell switch.

According to a fifth aspect of embodiments of the disclosure, a cell switch failure system is proposed. The system includes: a terminal and a network device. The terminal is configured to implement the above-mentioned method for cell switch failure processing performed by the terminal, and the network device is configured to implement the above-mentioned method for cell switch failure processing performed by the network device.

According to a sixth aspect of embodiments of the disclosure, a communication device is proposed. The device includes: a processor and a memory for storing a computer program. When the computer program is executed by the processor, the above-mentioned method for cell switch failure processing performed by the terminal is implemented.

According to a seventh aspect of embodiments of the disclosure, a communication device is proposed. The device includes: a processor and a memory for storing a computer program. When the computer program is executed by the processor, the above-mentioned method for cell switch failure processing performed by the network device is implemented.

According to an eighth aspect of embodiments of the disclosure, a computer readable storage medium for storing a computer program is proposed. When the computer program is performed by a processor, the above-mentioned method for cell switch failure processing performed by the terminal is implemented.

According to a ninth aspect of embodiments of the disclosure, a computer readable storage medium for storing a computer program is proposed. When the computer program is performed by a processor, the above-mentioned method for cell switch failure processing performed by the network device is implemented.

According to the embodiment of the disclosure, in a case where the terminal determines the failure of at least one cell switch, the terminal may perform the connection recovery to recover the connection with the cell. Therefore, it may be ensured that the terminal can continue to maintain communication without communication interruption due to the failure of at least one cell switch resulting in no connected cell.

### BRIEF DESCRIPTION OF THE DRAWINGS

In order to clearly illustrate the technical solutions of the embodiments of the disclosure, brief descriptions of drawings used in the embodiments is given below. Obviously, the drawings in the following descriptions are only part of the embodiments of the disclosure, and for those skilled in the art, other drawings can be obtained according to these drawings without inventive works.
FIG. 1 is a schematic flowchart of a method for cell switch failure processing according to an embodiment of the disclosure.
FIG. 2 is a schematic flowchart of a method for cell switch failure processing according to an embodiment of the disclosure.
FIG. 3 is a schematic flowchart of a method for cell switch failure processing according to an embodiment of the disclosure.
FIG. 4 is a schematic flowchart of a method for cell switch failure processing according to an embodiment of the disclosure.
FIG. 5 is a schematic flowchart of a method for cell switch failure processing according to an embodiment of the disclosure.
FIG. 6 is a schematic flowchart of a method for cell switch failure processing according to an embodiment of the disclosure.
FIG. 7 is a schematic flowchart of a method for cell switch failure processing according to an embodiment of the disclosure.
FIG. 8 is a schematic flowchart of a method for cell switch failure processing according to an embodiment of the disclosure.
FIG. 9 is a schematic flowchart of a method for cell switch failure processing according to an embodiment of the disclosure.
FIG. 10 is a schematic flowchart of a method for cell switch failure processing according to an embodiment of the disclosure.
FIG. 11 is a schematic flowchart of a method for cell switch failure processing according to an embodiment of the disclosure.
FIG. 12 is a schematic flowchart of a method for cell switch failure processing according to an embodiment of the disclosure.
FIG. 13 is a schematic flowchart of a method for cell switch failure processing according to an embodiment of the disclosure.
FIG. 14 is a schematic diagram of an apparatus for cell switch failure processing according to an embodiment of the disclosure.
FIG. 15 is a schematic diagram of an apparatus for cell switch failure processing according to an embodiment of the disclosure.
FIG. 16 is a schematic diagram of a device used for cell switch failure processing according to an embodiment of the disclosure.
FIG. 17 is a schematic diagram of a device used for cell switch failure processing according to an embodiment of the disclosure.

### DETAILED DESCRIPTION

The technical solutions in the embodiments of the disclosure will be described clearly and completely below in combination with the accompanying drawings in the embodiments of the disclosure. Clearly, the described embodiments are only a part of the embodiments of the disclosure, and not all of the embodiments. Based on the embodiments of the disclosure, other embodiments obtained by those skilled in the art without inventive works all fall within the scope of protection of the disclosure.

The terms used in the disclosure are only for the purpose of describing specific embodiments, and are not intended to limit the embodiments of the disclosure. The singular forms of "a" and "the" used in the disclosure and attached claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the embodiments of the disclosure to describe various types of information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "upon" or "in response to determining".

For the purposes of brevity and ease of understanding, the terms "greater than" or "less than", "higher than" or "lower than" are used herein to represent size relationships. Those skilled in the art understand that the term "greater than" also covers the meaning of "greater than or equal to" and the term "less than" also covers the meaning of "less than or equal to", and the term "higher than" also covers the meaning of "higher than or equal to", and the term "lower than" also covers the meaning of "lower than or equal to".

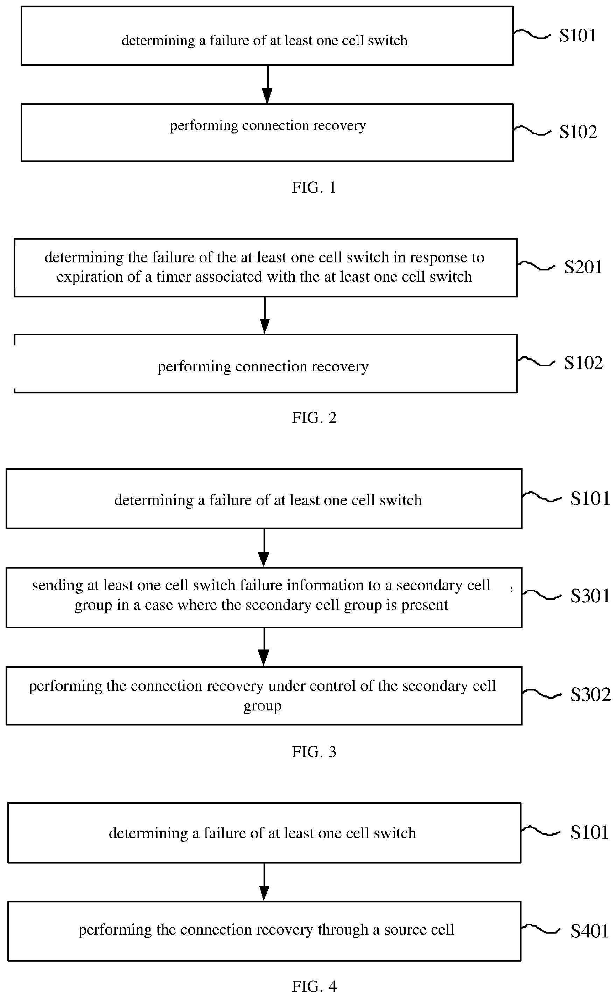

FIG. 1 is a schematic flowchart of a method for cell switch failure processing according to an embodiment of the disclosure. The method for cell switch failure processing shown in this embodiment is performed by a terminal. The terminal includes, but is not limited to, communication devices such as a mobile phone, a tablet computer, a wearable device, a sensor, and an Internet of Things (IoT) device. The terminal can communicate with a network device. The network device includes, but is not limited to, network devices in 4th generation (4G), 5th generation (5G), 6th generation (6G) and other communication systems, such as a base station and a core network.

As illustrated in FIG. 1, the method for cell switch failure processing includes the following steps.

At step S101, a failure of at least one cell switch is determined.

At step S102, connection recovery is performed.

It should be noted that in an embodiment, the at least one cell switch is different from cell handover in related arts.

In the related arts, a measurement operation on a cell during the cell handover is performed at a Layer 3 (L3), and it is required to perform cell selection/reselection and other operations, and the cell handover needs to be implemented based on a radio resource control (RRC) signaling. However, for the at least one cell switch in this embodiment of the disclosure, a measurement operation on at least one cell is performed at a Layer 1 (L1), and it may not perform operations such as cell selection/reselection or may not be implemented based on an RRC signaling.

In an embodiment, the at least one cell may be regarded as a cell set that includes one or more cells. In a case where the cell set includes a plurality of cells, each cell in the plurality of cells may belong to the same type, or at least two cells in the plurality of cells may belong to different types. This embodiment may be applied to any following embodiment involving the at least one cell.

In an embodiment, the at least one cell includes at least one of:
a master cell group (MCG);
a primary cell (PCell); or
the PCell and at least one secondary cell (SCell).

In an embodiment, in some scenarios, a terminal may communicate on the at least one cell. For example, in a dual connectivity (DC) scenario, the terminal may communicate with a network device on the MCG and a secondary cell group (SCG). In a carrier aggregation (CA) scenario, the terminal may communicate on the PCell and the at least one SCell. In a non-CA scenario, the terminal may communicate on the PCell.

The MCG may include the PCell and the at least one SCell. The SCG may include a primary secondary cell (PScell) and at least one SCell. Certainly, configurations of the MCG and the SCG are not limited to the above examples, and may be set as required.

When some events occur, the terminal may determine that it needs to perform the at least one cell switch. Descriptions of some exemplary events are illustrated below.

For example, after receiving a switch command sent by a first cell in the at least one cell, the terminal may determine that the first cell requires the terminal to perform the at least one cell switch. In an embodiment, the first cell may be one or more cells in the at least one cell where the terminal is before performing the at least one cell switch. For example, the at least one cell where the terminal is before the cell switch is the MCG, then the first cell may be the PCell in the MCG or one or more SCells in the MCG.

For example, in a case where the terminal determines that a condition for triggering the at least one cell switch is met, it may be determined that the terminal itself needs to perform the at least one cell switch. For example, the at least one cell switch may be triggered by a user of the terminal, it may be determined that the at least one cell switching needs to be performed.

It should be understood that the events that make the terminal determine that the at least one cell switch needs to be performed are not limited to the above, and can be set as needed.

In an embodiment, the terminal may perform the at least one cell switch in a case of determining that the at least one cell switch needs to be performed.

For example, the at least one cell includes the MCG, then performing the at least one cell switch may include switching the MCG, for example, switching all cells (including the PCell and the SCell) in the MCG, or a part of the cells in the MCG.

For example, the at least one cell includes the PCell, then performing the at least one cell switch may include switching the PCell.

For example, the at least one cell includes the PCell and the at least one SCell, then performing the at least one cell switch may include switching the PCell and the at least one SCell.

In some cases, during the at least one cell switch, the terminal may occur the failure of the at least one cell switch. Cases regarding the failure of the at least one cell switch will be described in the following embodiments, and will not be further explained here for brevity.

According to this embodiment, in a case where the terminal determines the failure of at least one cell switch, the terminal may perform the connection recovery to recover the connection with the cell. Therefore, it may be ensured that the terminal can continue to maintain communication without communication interruption due to the failure of at least one cell switch resulting in no connected cell.

FIG. 2 is a schematic flowchart of a method for cell switch failure processing according to an embodiment of the disclosure. As illustrated in FIG. 2, determining the failure of the at least one cell switch includes the following steps.

At step S201, it is determined the failure of the at least one cell switch in response to expiration of a timer associated with the at least one cell switch.

In an embodiment, the terminal is configured with the timer associated with the at least one cell switch. When the timer expires, the terminal can determine the failure of the at least one cell switch. An expiry duration of the timer can be configured by the network device or determined according to a protocol. After the timer starts timing, it is determined that the timer expires if a timing duration is greater than or equal to the expiry duration.

It should be noted that the expiry duration of the timer is essentially a preset duration. The implementation of this embodiment may be described as: from a moment when it is determined that at least one cell switch is needed, if an success of the at least one cell switch is not determined within a first preset duration, it is determined the failure of the at least one cell switch.

In an embodiment, an event that triggers the timer to start timing includes at least one of:
receiving a switch command sent by a first cell in the at least one cell. For example, if the at least one cell includes an MCG, the switch command may be an MCG switch command;
sending, to the first cell, a feedback to the switch command;
determining that a condition for triggering the at least one cell switch is met; or
releasing a PCell in the at least one cell.

It should be noted that the first cell does not refer to a specific cell, but refers to any cell in the at least one cell where the terminal is before performing the at least one cell switch.

In an embodiment, regarding two conditions of receiving the switch command sent by the first cell in the at least one cell, and determining that the condition for triggering the at least one cell switch is met, these two cases have been described in the above embodiments and will not be repeated here. The following mainly describes the two cases of sending, to the first cell, the feedback to the switch command, and releasing the PCell in the at least one cell.

For example, after receiving the switch command sent by the first cell in the at least one cell, the terminal sends the feedback to the switch command to the first cell, in a case of determining that the terminal agrees the switch command, the at least one cell switch needs to be performed. The feedback may be sent in a form of hybrid automatic repeat request (HARQ) or a media access control control element (MAC CE), which can be set as required.

For example, when releasing the PCell in the at least one cell (including, but not limited to, releasing a MAC layer parameter of the PCell), the terminal may determine that the at least one cell switch needs to be performed. Since the terminal communicates on the at least one cell, mainly on the PCell in the at least one cell, when releasing the PCell, the terminal will not be able to communicate on the PCell, and thus it can be determined that the at least one cell switch needs to be performed.

In an embodiment, the terminal may start the timer when determining the event that triggers the timer to start timing.

In an embodiment, in a case where the at least one cell switch is random access channel (RACH)-based switch, an event that triggers the timer to stop timing includes:
successful RACH initiated to a target cell.

In an embodiment, the target cell may be one or more cells in the at least one cell that the terminal needs to be switched to.

For example, if the at least one cell includes the MCG, the target cell may be the MCG that needs to be switched to, such as a PCell and a SCell in the MCG, or the target cell may be the PCell in the MCG that needs to be switched to, or the target cell may be the SCell in the MCG that needs to be switched to.

For example, if the at least one cell includes the PCell, the target cell may be a PCell that needs to be switched to.

For example, if the at least one cell includes the PCell and at least one SCell, the target cell may be a PCell and a SCell in the PCell and the at least one SCell that needs to be switched to, or the PCell in the PCell and the at least one SCell that needs to be switched to, or the SCell in the PCell and the at least one SCell that needs to be switched to.

In an embodiment, in a case where the at least one cell switch is the RACH-based switch, the terminal may perform the at least one cell switch based on the RACH, for example, initiating the RACH to the target cell. If the RACH is a 4-step RACH, the RACH is considered to be successful when the terminal receives a fourth message (Msg4) in the 4-step RACH. If the RACH is 2-step RACH, the r RACH is considered to be successful when the terminal receives a second message (Msg2) in the 2-step RACH.

Before the timer expires, the terminal may stop the timing of the timer in a case where determining that the RACH initiated to the target cell is successful. When determining that the at least one cell switch is required for the next time (for example, the next time an event occurs that causes the terminal to determine that at least one cell switch needs to be performed, the specific events are described in the previous embodiment, which will not be repeated here), the terminal restarts the timer, and the timer starts timing again. If the terminal fails to determine that the RACH initiated to the target cell is successful before the timer expires, the terminal can determine that the at least one cell switch has failed when the timer expires.

It should be noted that in an embodiment, when the terminal performs the at least one cell switch, a source cell before switching and a target cell after switching may be cells or cell groups under the same base station, or cells or cell groups under different base stations.

In an embodiment, in a case where the at least one cell switch is RACH-less switch, an event that triggers the timer to stop timing includes at least one of:
receiving a downlink transmission sent by a target cell;
receiving, from the target cell, downlink control information for scheduling a new transmission; or
receiving feedback information indicating a successful access. For example, the feedback information may be sent in an explicit way or in an implicit way. The following embodiments mainly describe the explicit way by way of examples.

The target cell is at least one cell to which the terminal needs to switch.

In an embodiment, in a case where the at least one cell switch is the RACH-less switch, performing the at least one cell switch by the terminal may not be based on the RACH. For example, the terminal may send notification information (such as a MAC CE) to the target cell to inform the target cell that the terminal is going to switch to the target cell.

The terminal may determine that the at least one cell switch is successfully, i.e., the terminal has successfully switched to the target cell, under certain events. Exemplary descriptions of the events are provided below.

For example, the terminal receives the downlink transmission sent by the target cell. In detail, the terminal may receive the downlink transmission sent by the target cell within a second preset duration from a moment when the terminal sends notification information to the target cell. Since the target cell sends the downlink transmission to the terminal after the terminal has successfully switched to the target cell, the terminal may determine the success of the at least one cell switch when receiving the downlink transmission sent by the target cell. The downlink transmission includes, but is not limited to, a physical downlink control channel (PDCCH), such as a PDCCH scrambled by a cell-radio network temporary identifier (C-RNTI) of the terminal.

For example, the terminal receives from the target cell the downlink control information (DCI) for scheduling the new transmission (a new uplink transmission or a new downlink transmission). In detail, the terminal receives the DCI for scheduling the new transmission sent by the target cell within a third preset duration from a moment when the terminal sends notification information to the target cell. Since the target cell sends the DCI for scheduling the new transmission to the terminal after the terminal has successfully switched to the target cell, the terminal may determine the success of the at least one cell switch when receiving the DCI for scheduling the new transmission sent by the target cell. The DCI for scheduling the new transmission may be DCI scrambled by the C-RNTI of the terminal.

For example, the terminal receives the feedback information indicating the successful access. The feedback information may be a feedback to notification information. In detail, the terminal receives the feedback information sent by the target cell within a fourth preset duration from a moment when the terminal sends the notification information to the target cell. Since the target cell sends the feedback information to the terminal to inform the terminal of the successful access when the terminal has successfully switched to the target cell, the terminal may determine the success of the at least one cell switch when receiving the feedback information indicating the successful access.

It should be understood that the events that cause the terminal to determine the success of the at least one cell switch are not limited to the above, which can be set as needed.

In an embodiment, the event that triggers the timer associated with the at least one cell switch to stop timing may be the same as the event that causes the terminal to determine the success of the at least one cell switch. The terminal may control the timer to stop timing when determining the success of the at least one cell switch, so that the timer will not expire, the terminal will not determine the failure of the at least one cell switch.

In an embodiment, the feedback information includes at least one of:
an RRC layer signaling;
a media access control layer signaling, such as a MAC CE; or
a physical layer signaling, such as DCI.

Taking the MAC CE as an example for the feedback information, in order to distinguish it from a MAC CE in related arts, in an embodiment, a new defined MAC CE is used as the feedback information. In another embodiment, a contention resolution MAC CE can be multiplexed, but all values in the MAC CE need to be set to predefined values (such as 0 or 1).

The embodiment shown in FIG. 2 may be implemented independently or on the basis of any of the previous embodiments. For example, on the basis of the embodiment shown in FIG. 1, the embodiment may be implemented according to the following steps:
determining the failure of the at least one cell switch in response to expiration of a timer associated with the at least one cell switch; and
performing the connection recovery.

Related embodiments may be described with reference to the previous descriptions, and each of the related embodiments may be implemented independently or in combination with other embodiments as required, which is not limited in the disclosure.

In a case where the timer expires, the terminal may determine the failure of the at least one cell failure and then perform the connection recovery. The way of performing the connection recovery will be exemplified through the following embodiments.

FIG. 3 is a schematic flowchart of a method for cell switch failure processing according to an embodiment of the disclosure. As illustrated in FIG. 3, performing the connection recovery includes the following steps.

At step S301, at least one cell switch failure information is sent to a SCG in a case where the secondary cell group is present.

At step S302, connection recovery is performed under control of the SCG.

In an embodiment, in a case where the secondary cell group is present (the terminal is configured with the SCG, and the SCG is available), if the terminal is configured by a network device to be enabled to send the at least one cell switch failure information to the SCG, or the terminal is enabled to send the at least one cell switch failure information to the SCG according to a protocol, the terminal may send the at least one cell change failure information to the SCG, and then perform the connection recovery under the control of the SCG.

A process of the SCG controlling the terminal to perform the connection recovery is specifically implemented based on the SCG, which is not limited in the disclosure. For example, the SCG controls the terminal to access the SCG as the at least one cell to recover the connection. For example, the SCG may designate a cell group as the at least one cell for the terminal to access to recover the connection.

In an embodiment, performing the connection recovery further includes:
in a case where the secondary cell group is absent, performing a cell selection, and performing radio resource control restoration through a selected cell to recover connection.

In an embodiment, in a case where the secondary cell group is absent, for example, the network device does not configure the SCG for the terminal, or the network device configures the SCG for the terminal, but the SCG is unavailable, the terminal may perform the cell selection, and perform then the RRC restoration through the selected cell to recover the connection.

It should be noted that RRC restoration in this embodiment may be different from RRC restoration in related arts.

In an embodiment, performing the RRC restoration through the selected cell to recover connection includes:
in a case where the selected cell is a candidate cell with a pre-configured radio resource control parameter, performing the connection recovery on the candidate cell according to the radio resource control parameter.

In an embodiment, a candidate cell may be selected by the network device for the terminal according to a measurement result obtained by performing a measurement through a L3 and reported by the terminal before performing the at least one cell switch. The network device configures the RRC parameter of the candidate cell for the terminal.

When selecting the candidate cell during the cell selection, the terminal may perform the connection recovery on the candidate cell according to the pre-configured RRC parameter of the candidate cell. Compared with the RRC restoration process in the related arts, since the RRC parameter of the candidate cell has been configured for the terminal by the network device before the terminal performs at least one cell selection, in this embodiment, the network device only needs to configure for the terminal with RRC parameters other than the pre-configured RRC parameter.

In an embodiment, performing the radio resource control restoration through the selected cell to recover connection includes:
performing the connection recovery on the selected cell according to a radio resource control parameter configured to a source cell, based on an indication of a network device.

In an embodiment, the network device may indicate the terminal to perform the connection recovery on the selected cell according to the RRC parameter configured to the source cell. Since the RRC parameter of the source cell has been configured to the terminal by the network device before the terminal performs the at least one cell selection, in this embodiment, the network device only needs to configure the terminal with RRC parameters other than the preconfigured RRC parameter. Accordingly, it is beneficial to simplifying a process of the network device configuring the RRC parameter for the terminal in the connection recovery process, and it is further beneficial to complete the connection recovery as soon as possible.

The embodiment shown in FIG. 3 may be implemented independently or on the basis of any of the previous embodiments. For example, based on the embodiment shown in FIG. 1, the embodiment shown in FIG. 3 may be implemented according to the following steps including:
determining the failure of the at least one cell switch;
in a case where the SCG is present, sending the at least one cell switch failure information to the SCG;
performing the connection recovery under the control of the SCG.

Related embodiments may be described with reference to the previous descriptions, and each of the related embodiments may be implemented independently or in combination with other embodiments as required, which is not limited in the disclosure.

FIG. 4 is a schematic flowchart of a method for cell switch failure processing according to an embodiment of the disclosure. As illustrated in FIG. 4, performing the connection recovery includes the following steps.

At step S401, the connection recovery is performed through a source cell.

In an embodiment, the source cell may be one or more cells in at least one cell where the terminal is before performing the at least one cell switch.

For example, when the at least one cell includes an MCG, the source cell may be an MCG where the terminal is before performing the at least one cell switch, such as a PCell and a SCell in the MCG, or the source cell may be the PCell in the MCG where the terminal is before performing the at least one cell switch, or the source cell may be the SCell in the MCG where the terminal is before performing the at least one cell switch.

For example, when the at least one cell includes a PCell, the source cell may be the PCell where the terminal is before performing the at least one cell switch.

For example, when the at least one cell includes a PCell and at least one SCell, the source cell may be the PCell and a SCell in the PCell and the at least one SCell where the terminal is before performing the at least one cell switch, or the source cell may be the PCell in the PCell and the at least one SCell where the terminal is before performing the at least one cell switch, or the source cell may be a SCell in the PCell and the at least one SCell where the terminal is before performing the at least one cell switch.

When the terminal determines that the at least one cell switch fails, the terminal can directly perform the connection recovery through the source cell without performing the cell selection, for example, continuing to communicate on the source cell. After the terminal successfully performs the at least one cell switch, for example, after switching to a target cell, the target cell may send a feedback to the source cell to inform the source cell that the terminal has successfully switched to the target cell. The source cell may maintain the connection with the terminal before receiving the feedback from the target cell, so that the terminal can perform the connection recovery directly through the source cell in case of the failure of the at least one cell switch. The source cell may release the connection with the terminal only after receiving the feedback from the target cell.

Since the source cell may maintain the connection with the terminal to enable the terminal to perform the connection recovery through the source cell, there is no need for RRC restoration in the process, which is convenient for the terminal to perform the connection recovery quickly.

In an embodiment, performing the connection recovery through the source cell includes:
sending the at least one cell switch failure information to the source cell; and
accessing the source cell.

In an embodiment, when performing the connection recovery through the source cell, the terminal may first send the at least one cell switch failure information to the source cell to inform the source cell that the terminal occurs a failure of the at least one cell switch, such that it may be ensured that the source cell may know that the terminal needs to access the source cell, and then the terminal may access the source cell and communicate on the source cell smoothly. There is no need for RRC reconstruction in the process.

In an embodiment, performing the connection recovery further includes:
in a case where accessing the source cell fails, performing a cell selection, and performing radio resource control restoration through a selected cell to recover connection.

In an embodiment, the terminal needs to access the source cell in the case of performing the connection recovery through the source cell. For example, the terminal first sends the at least one cell switch failure information to the source cell, and the terminal may determine that its access to the source cell is successful in response to receiving a downlink transmission of a first cell in at least one cell. In response to failing to receive the downlink transmission of the first cell in the at least one cell, for example, failing to receive the downlink transmission of the first cell in the at least one cell within a fourth preset duration from a moment of sending the at least one cell switch failure information to the source cell, the terminal may determine that its access to the source cell has failed, and then perform the cell selection and perform the RRC restoration through the selected cell to recover connection.

It should be noted that the RRC restoration in this embodiment may be different from RRC restoration in related arts.

In an embodiment, performing the RRC restoration through the selected cell to recover connection includes:
in a case where the selected cell is a candidate cell with a pre-configured radio resource control parameter, performing the connection recovery on the candidate cell according to the radio resource control parameter.

In an embodiment, a candidate cell may be selected by the network device for the terminal according to a measurement result which is obtained by performing a measurement through a L3 and reported by the terminal before performing the at least one cell switch. The network device configures the RRC parameter of the candidate cell for the terminal.

In a case where the terminal selects the candidate cell during the cell selection, the terminal may perform the connection recovery on the candidate cell according to the pre-configured RRC parameter of the candidate cell. Compared with the RRC restoration process in the related arts, since the RRC parameter of the candidate cell has been configured for the terminal by the network device before the terminal performs at least one cell selection, in this embodiment, the network device only needs to configure the terminal with RRC parameters other than the pre-configured RRC parameter.

In an embodiment, performing the radio resource control restoration through the selected cell to recover connection includes:
performing the connection recovery on the selected cell according to a radio resource control parameter configured to a source cell, based on an indication of a network device.

In an embodiment, the network device may indicate the terminal to perform the connection recovery on the selected cell according to the RRC parameter configured to the source cell. Since the RRC parameter of the source cell has been configured to the terminal by the network device before the terminal performs the at least one cell selection, in this embodiment, the network device only needs to configure the terminal with RRC parameters other than the pre-configured RRC parameter. Accordingly, it is beneficial to simplifying a process of the network device configuring the RRC parameter for the terminal in the connection recovery process, and it is further beneficial to complete the connection recovery as soon as possible.

The embodiment shown in FIG. 4 may be implemented independently or on the basis of any of the previous embodiments. For example, based on the embodiment shown in FIG. 1, the embodiment shown in FIG. 4 may be implemented according to the following steps including:
determining the failure of the at least one cell switch; and
performing the connection recovery through the source cell.

Related embodiments may be described with reference to the previous descriptions, and each of the related embodiments may be implemented independently or in combination with other embodiments as required, which is not limited in the disclosure.

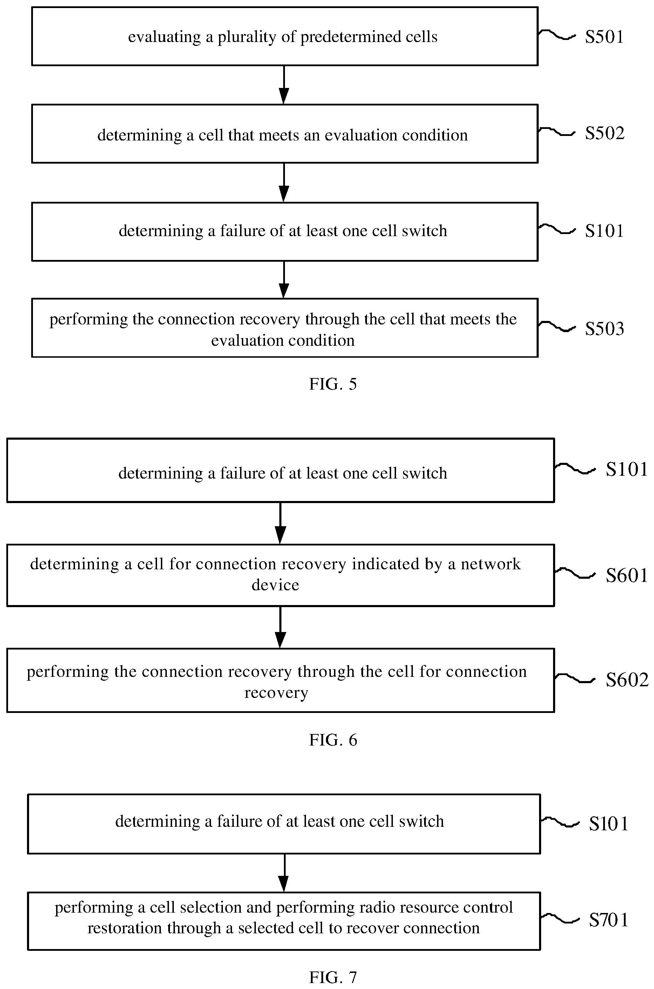

FIG. 5 is a schematic flowchart of a method for cell switch failure processing according to an embodiment of the disclosure. As illustrated in FIG. 5, the method further includes the following steps.

At step S501, a plurality of predetermined cells are evaluated.

At step S502, a cell that meets an evaluation condition is determined.

Performing the connection recovery (for example, step S102 in the embodiment shown in FIG. 1, or performing the connection recovery in any of the previous embodiments) includes the following step.

At step S503, the connection recovery is performed through the cell that meets the evaluation condition.

In an embodiment, before the at least one cell switch, the terminal may predetermine a plurality of cells, for example, the plurality of cells may be determined according to a protocol or according to a cell list configured by a network device. The terminal may evaluate the plurality of cells and determine the cell that meets the evaluation condition. When performing the connection recovery after the failure of the at least one cell switch, the terminal may perform the connection recovery through the cell that meets the evaluation condition (for example, through RRC restoration) without performing an operation of cell selection. Thus, it is beneficial to quickly completing the connection recovery.

The manner of evaluating the plurality of cells may be set as required, which is not limited in the disclosure. For example, for each cell in the plurality of cells, a channel condition of the cell may be represented by an average beam quality Q of the cell (e.g., an average value of beam qualities of the cell measured many times).

For example, the evaluation condition is that Q is greater than a threshold T1, in response to Q corresponding to a cell being greater than the threshold T1, it may be determined that the cell is a cell that meets the evaluation condition, and the cell is added to a candidate cell group. Further, the terminal may select a cell from the candidate cell group to perform the connection recovery. The terminal may continue to evaluate the cells in the candidate cell group, and in response to Q corresponding to a cell in an evaluation being not greater than the threshold T1, it may remove the cell from the candidate cell group.

For example, the evaluation condition is that Q measured consecutively N times is greater than the threshold T1, it may be determined whether a corresponding cell meets the evaluation condition according to results of N consecutive evaluations of the cell. For example, in response to Q obtained by multiple consecutive evaluations of the cell being greater than T1, it may be determined that the cell is a cell that meets the evaluation condition, and the cell is added to a candidate cell group. Further, the terminal may select a cell from the candidate cell group to perform the connection recovery. The terminal may continue to evaluate the cells in the candidate cell group, and in response to Q corresponding to a cell in the consecutive evaluations is less than a threshold T2 (T2 may be equal to T1, or a value less than T1, or a value greater than T1), it may remove the cell from the candidate cell group.

In an embodiment, in a case where there are multiple cells that meet the evaluation condition, the terminal may select one cell for connection recovery by itself, or select one cell for connection recovery according to a predefined rule, for example, selecting the cell that meets the evaluation condition in the latest evaluation for connection recovery.

In an embodiment, for the cell that meets the evaluation condition, in a case where the network device informs the terminal of a Timing Advance (TA) of the cell through TA management, it may be considered that the terminal has completed uplink synchronization on the cell, so it may send information to the cell without necessary to perform random access, for example, using reserved resources (which may be pre-configured) to send messages. Thus, it is beneficial to quickly completing the connection recovery. However, for a cell that meets the evaluation condition, in a case where the network device does not inform the terminal of the TA of the cell, the terminal needs to perform the random access if it wants to perform connection recovery on the cell.

In an embodiment, the plurality of predetermined cells include at least one of:
a source cell; or
a candidate cell with a pre-configured radio resource control parameter.

In an embodiment, in a case where the source cell meets the evaluation condition, since the RRC parameter of the source cell is known to the terminal, when the terminal performs the connection recovery through the source cell, the network device may not need to reconfigure the RRC parameter of the source cell for the terminal. Accordingly, it is beneficial to simplifying a process of the network device configuring the RRC parameter for the terminal in the connection recovery process, and it is beneficial to complete the connection recovery as soon as possible.

In an embodiment, in a case where the candidate cell meets the evaluation condition, the terminal performs the connection recovery through the candidate cell. The candidate cell may be selected by the network device for the terminal according to a measurement result which is obtained by performing a measurement through a L3 and reported by the terminal before performing the at least one cell switch. The network device configures the RRC parameter (such as a PDCCH resource, etc.) of the candidate cell for the terminal.

The terminal performs the at least one cell switch generally due to a relatively poor service quality of the source cell, therefor, after the failure of the at least one cell switch, the terminal may perform the connection recovery through the source cell, even though the source cell may not be a suitable cell. However, after the failure of the at least one cell switch, the terminal may perform the connection recovery by means of RRC restoration. Due to a need for the cell selection, it may take a long time, and may lead to a longer connection interruption.

According to this embodiment, the RRC parameter of the candidate cell has been configured for the terminal by the network device before the terminal performs at least one cell selection, therefore, for the candidate cell, the network device only needs to configure for the terminal with RRC parameters other than the pre-configured RRC parameter. Compared with performing the connection recovery through the source cell, it is beneficial to performing the connection recovery through a more suitable cell. Moreover, compared with performing the connection recovery through the RRC restoration, it is beneficial to simplifying a process of the network device configuring the RRC parameter for the terminal in the connection recovery process, and it is further beneficial to complete the connection recovery as soon as possible.

In an embodiment, performing the connection recovery further includes:
in a case where the cell that meets the evaluation condition is absent, performing a cell selection and performing radio resource control restoration through a selected cell to recover connection.

In an embodiment, when the terminal evaluates multiple cells, it is possible that none of the cells meet the evaluation condition. In such case, the terminal may perform the cell selection, and perform the RRC restoration through the selected cell to recover the connection.

It should be noted that RRC restoration in this embodiment may be different from RRC restoration in related arts.

In an embodiment, performing the RRC restoration through the selected cell for the connection recovery includes:
in a case where the selected cell is a candidate cell with a pre-configured radio resource control parameter, performing the connection recovery on the candidate cell according to the radio resource control parameter.

In an embodiment, a candidate cell may be selected by the network device for the terminal according to a measurement result after the terminal performs a measurement through a L3 and reports the measurement result before performing the at least one cell switch. The network device configures the RRC parameter of the candidate cell for the terminal.

When selecting the candidate cell during the cell selection, the terminal may perform the connection recovery on the candidate cell according to the pre-configured RRC parameter of the candidate cell. Compared with the RRC restoration process in the related arts, since the RRC parameter of the candidate cell has been configured for the terminal by the network device before the terminal performs at least one cell selection, in this embodiment, the network device only needs to configure for the terminal with RRC parameters other than the pre-configured RRC parameter.

In an embodiment, performing the radio resource control restoration through the selected cell to recover connection includes:
performing the connection recovery on the selected cell according to a radio resource control parameter configured to a source cell, based on an indication of a network device.

In an embodiment, the network device may indicate the terminal to perform the connection recovery on the selected cell according to the RRC parameter configured to the source cell. Since the RRC parameter of the source cell has been configured to the terminal by the network device before the terminal performs the at least one cell selection, in this embodiment, the network device only needs to configure the terminal with RRC parameters other than the preconfigured RRC parameter, which is beneficial to simplifying a step for the network device to configure the RRC parameter for the terminal in the connection recovery process, so as to complete the connection recovery as soon as possible.

The embodiment shown in FIG. 5 may be implemented independently or on the basis of any of the previous embodiments. For example, based on the embodiment shown in FIG. 1, the embodiment shown in FIG. 5 may be implemented according to the following steps including:
evaluating a plurality of predetermined cells;
determining a cell that meets an evaluation condition;
determining a failure of at least one cell switch; and
performing connection recovery through the cell that meets the evaluation condition.

Related embodiments may be described with reference to the previous descriptions, and each of the related embodiments may be implemented independently or in combination with other embodiments as required, which is not limited in the disclosure.

FIG. 6 is a schematic flowchart of a method for cell switch failure processing according to an embodiment of the disclosure. As illustrated in FIG. 6, performing the connection recovery includes the following steps.

At step S601, a cell for connection recovery indicated by a network device is determined.

At step S602, connection recovery is performed through the cell for connection recovery.

In an embodiment, the network device may indicate the cell for connection recovery to the terminal, so that when the terminal performs the connection recovery after the at least one cell switch fails, the terminal directly performs the connection recovery through the cell for connection recovery indicated by the network device without cell selection. For example, the network device may indicate the cell for connection recovery in at least one cell switch command sent to the terminal.

In an embodiment, performing connection recovery further includes:
in response to a failure in performing the connection recovery through the cell for connection recovery, performing a cell selection and performing radio resource control restoration through a selected cell to recover connection.

In an embodiment, the terminal needs to access a source cell in the case of performing the connection recovery through a cell for connection recovery indicated by the network device. For example, the terminal first sends at least one cell switch failure information to the cell for connection recovery, and the terminal may determine that its access to the cell for connection recovery is successful in response to receiving a downlink transmission of the cell for connection recovery. However, in response to failing to receive the downlink transmission of the cell for connection recovery, for example, failing to receive the downlink transmission of the cell for connection recovery within a fifth preset duration from a moment of sending the at least one cell switch failure information to the cell for connection recovery, the terminal may determine that its access to the cell for connection recovery has failed, and then perform the cell selection and performs RRC restoration through the selected cell to recover connection.

It should be noted that RRC restoration in this embodiment may be different from RRC restoration in related arts.

In an embodiment, performing the RRC restoration through the selected cell for the connection recovery includes:
in a case where the selected cell is a candidate cell with a pre-configured radio resource control parameter, performing the connection recovery on the candidate cell according to the radio resource control parameter.

In an embodiment, a candidate cell may be selected by the network device for the terminal according to a measurement result after the terminal performs a measurement through a L3 and reports the measurement result before performing the at least one cell switch. The network device configures the RRC parameter of the candidate cell for the terminal.

When selecting the candidate cell during the cell selection, the terminal may perform the connection recovery on the candidate cell according to the pre-configured RRC parameter of the candidate cell. Compared with the RRC restoration process in the related arts, since the RRC parameter of the candidate cell has been configured for the terminal by the network device before the terminal performs at least one cell selection, in this embodiment, the network device only needs to configure for the terminal with RRC parameters other than the pre-configured RRC parameter.

In an embodiment, performing the radio resource control restoration through the selected cell to recover connection includes:
performing the connection recovery on the selected cell according to a radio resource control parameter configured to a source cell, based on an indication of a network device.

In an embodiment, the network device may indicate the terminal to perform the connection recovery on the selected cell according to the RRC parameter configured to the source cell. Since the RRC parameter of the source cell has been configured to the terminal by the network device before the terminal performs the at least one cell selection, in this embodiment, the network device only needs to configure the terminal with RRC parameters other than the preconfigured RRC parameter, which is beneficial to simplifying a step for the network device to configure the RRC parameter for the terminal in the connection recovery process, so as to complete the connection recovery as soon as possible.

The embodiment shown in FIG. 6 may be implemented independently or on the basis of any of the previous embodiments. For example, based on the embodiment shown in FIG. 1, the embodiment shown in FIG. 6 may be implemented according to the following steps including:
determining a failure of at least one cell switch;
determining a cell for connection recovery indicated by a network device; and
performing connection recovery through the cell for connection recovery.

Related embodiments may be described with reference to the previous descriptions, and each of the related embodiments may be implemented independently or in combination with other embodiments as required, which is not limited in the disclosure.

FIG. 7 is a schematic flowchart of a method for cell switch failure processing according to an embodiment of the disclosure. As illustrated in FIG. 7, performing the connection recovery includes the following step.

At step S701, a cell selection is performed, and RRC restoration is performed through a selected cell to recover connection.

In an embodiment, when the terminal performs the connection recovery after the failure of the at least one cell switch, the terminal may perform the cell selection and perform the RRC restoration through the selected cell to recover the connection.

It should be noted that RRC restoration in the embodiments of the disclosure is different from RRC restoration in related arts, which will be explained by several embodiments.

In an embodiment, performing the RRC restoration through the selected cell to recover connection includes:
in a case where the selected cell is a candidate cell with a pre-configured radio resource control parameter, performing the connection recovery on the candidate cell according to the radio resource control parameter.

In an embodiment, a candidate cell may be selected by the network device for the terminal according to a measurement result after the terminal performs a measurement through a L3 and reports the measurement result before performing the at least one cell switch. The network device configures the RRC parameter of the candidate cell for the terminal.

When selecting the candidate cell during the cell selection, the terminal may perform the connection recovery on the candidate cell according to the pre-configured RRC parameter of the candidate cell. Compared with the RRC restoration process in the related arts, since the RRC parameter of the candidate cell has been configured for the terminal by the network device before the terminal performs at least one cell selection, in this embodiment, the network device only needs to configure for the terminal with RRC parameters other than the pre-configured RRC parameter. Accordingly, it is beneficial to simplifying a process of the network device configuring the RRC parameter for the terminal in the connection recovery process, and it is further beneficial to complete the connection recovery as soon as possible.

The number of times, n, that the terminal attempts to perform the connection recovery through the candidate cell may be limited, for example, the number of times may be determined based on a protocol or indicated by the network device. In a case of failing to perform the connection recovery through the candidate cell, the terminal is allowed to perform the connection recovery through the candidate cell repeatedly up to a maximum of n. If the terminal still fails to perform the connection recovery at the n-th attempt, it may perform the connection recovery in other ways, so as to avoid slow connection recovery and waste of resources due to too many attempts.

In an embodiment, performing the radio resource control restoration through the selected cell to recover connection includes:
performing the connection recovery on the selected cell according to a radio resource control parameter configured to a source cell, based on an indication of a network device.

In an embodiment, the network device may indicate the terminal to perform the connection recovery on the selected cell according to the RRC parameter configured to the source cell. Since the RRC parameter of the source cell has been configured to the terminal by the network device before the terminal performs the at least one cell selection, in this embodiment, the network device only needs to configure the terminal with RRC parameters other than the preconfigured RRC parameter. Accordingly, it is beneficial to simplifying a process of the network device configuring the RRC parameter for the terminal in the connection recovery process, and it is further beneficial to complete the connection recovery as soon as possible.

The embodiment shown in FIG. 7 may be implemented independently or on the basis of any of the previous embodiments. For example, based on the embodiment shown in FIG. 1, the embodiment shown in FIG. 7 may be implemented according to the following steps including:
determining a failure of at least one cell switch; and
performing a cell selection and performing radio resource control restoration through a selected cell to recover connection.

Related embodiments may be described with reference to the previous descriptions, and each of the related embodiments may be implemented independently or in combination with other embodiments as required, which is not limited in the disclosure.

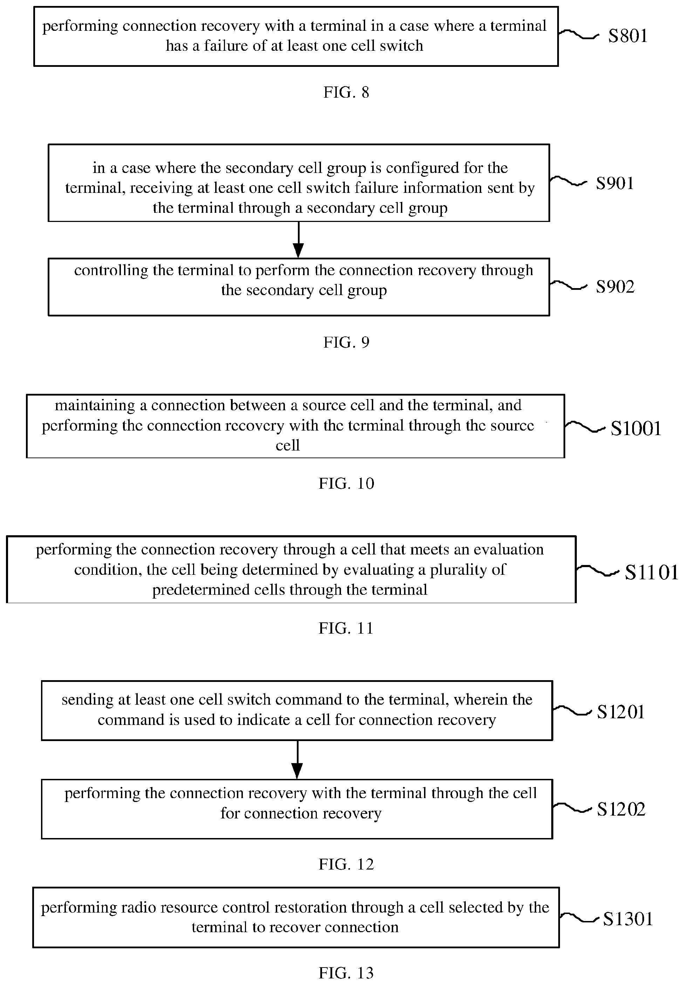

FIG. 8 is a schematic flowchart of a method for cell switch failure processing according to an embodiment of the disclosure. The method shown in this embodiment is performed by a network device that can communicate with a terminal. The network device includes, but is not limited to, a base station in various a communication system such as a 4G base station, a 5G base station and a 6G base station. The terminal includes, but is not limited to, a mobile phone, a tablet computer, a wearable device, a sensor, an IoT device and other communication devices.

As illustrated in FIG. 8, the method for cell switch failure processing may include the following steps.

At step S801, connection recovery with a terminal is performed in a case where a terminal has a failure of at least one cell switch.

It should be noted that in an embodiment, the at least one cell switch is different from cell handover in related arts.

In the related arts, a measurement operation on a cell during the cell handover is performed at a Layer 3 (L3), and it is required to perform cell selection/reselection and other operations, and the cell handover needs to be implemented based on a radio resource control (RRC) signaling. However, for the at least one cell switch in this embodiment of the disclosure, a measurement operation on at least one cell is performed at a Layer 1 (L1), and it may not perform operations such as cell selection/reselection or may not be implemented based on an RRC signaling.

In an embodiment, the at least one cell may be regarded as a cell set that includes one or more cells. In a case where the cell set includes a plurality of cells, each cell in the plurality of cells may belong to the same type, or at least two cells in the plurality of cells may belong to different types. This embodiment may be applied to any following embodiment involving the at least one cell.

In an embodiment, the at least one cell includes at least one of:
an MCG;
a PCell; or
the PCell and at least one SCell.

In an embodiment, in some scenarios, a terminal may communicate on at least one cell. For example, in a DC scenario, the terminal may communicate with the network device on the at least one cell and the SCG. In a CA scenario, the terminal may communicate on the PCell and the at least one SCell. In a non-CA scenario, the terminal may communicate on the PCell.

The MCG may include the PCell and the at least one SCell. The SCG may include the PScell and the at least one SCell. Certainly, configurations of the MCG and the SCG are not limited to the above examples, and may be set as required.

When some events occur, the terminal may determine that it needs to perform the at least one cell switch. Descriptions of some exemplary events are illustrated below.

For example, after receiving a switch command sent by a first cell in the at least one cell, the terminal may determine that the first cell requires the terminal to perform the at least one cell switch. In an embodiment, the first cell may be one or more cells in the at least one cell where the terminal is before performing the at least one cell switch. For example, the at least one cell where the terminal is before the cell switch is the MCG, then the first cell may be the PCell in the MCG or one or more SCells in the MCG.

For example, after receiving the switch command sent by the first cell in the at least one cell, the terminal sends a feedback to the switch command to the first cell, and in a case of determining that the terminal agrees to perform the at least one cell switch, the at least one cell switch needs to be performed. The feedback may be sent in a form of a HARQ or a MAC CE, which can be set as required.

For example, in a case where the terminal determines that a condition for triggering the at least one cell switch is met, it may be determined that the terminal itself needs to perform the at least one cell switch. For example, the at least one cell switch may be triggered by a user of the terminal, it may be determined that the at least one cell switch needs to be performed.

For example, when releasing the PCell in the at least one cell (including, but not limited to, releasing a MAC layer parameter of the PCell), the terminal may determine that the at least one cell switch needs to be performed. Since the terminal communicates on the at least one cell, mainly on the PCell in the at least one cell, when releasing the PCell, the terminal will not be able to communicate on the PCell, and thus it can be determined that the at least one cell switch needs to be performed.

It should be understood that the events that cause the terminal to determine that the at least one cell switch is needed are not limited to the above, and can be set as needed.

In an embodiment, the terminal may perform at least one cell switch when determining that the at least one cell switch needs to be performed.

For example, in a case where the at least one cell includes an MCG, performing the at least one cell switch may include switching the MCG, for example switching all cells (including a PCell and a SCell) in the MCG, or switching a part of the cells in the MCG.

For example, in a case where the at least one cell includes a PCell, performing the at least one cell switch may include switching the PCell.

For example, in a case where the at least one cell includes a PCell and at least one SCell, performing the at least one cell switch may include switching the PCell and the at least one SCell.

In some cases, when the terminal performs the at least one cell switch, it may occur the failure of the at least one cell switch. The method for determining the failure of the at least one cell switch may be implemented with a timer. Related implementations have been described in the previous embodiments on the terminal side, and will not be further repeated herein.

According to this embodiment, the network device may perform the connection recovery with the terminal, for example, recover a connection between the terminal and the cell, in a case where the terminal has the failure of at least one cell switch. Therefore, it may be ensured that the terminal can continue to maintain communication without communication interruption due to the failure of at least one cell switch resulting in no connected cell.

FIG. 9 is a schematic flowchart of a method for cell switch failure processing according to an embodiment of the disclosure. As illustrated in FIG. 9, performing the connection recovery with the terminal includes the following steps.

At step S901, in a case where the secondary cell group is configured for the terminal, at least one cell switch failure information sent by the terminal is received through a secondary cell group.

At step S902, the terminal is controlled to perform connection recovery through the secondary cell group.

In an embodiment, in a case where the network device configures the SCG for the terminal and the SCG is available, if the terminal is configured by a network device to be enabled to send the at least one cell switch failure information to the SCG, or the terminal is enabled to send the at least one cell switch failure information to the SCG according to a protocol, the terminal may send the at least one cell change failure information to the SCG, further, the base station may control the terminal to perform the connection recovery through the SCG, after receiving the at least one cell switch failure information through the SCG.

A process of the network device controlling the terminal to perform the connection recovery through the SCG is specifically implemented based on the network device, which is not limited in the disclosure. For example, the network device may control the terminal to access the SCG as the at least one cell to recover the connection. For example, the network device may designate, through the SCG, a cell group as the at least one cell for the terminal to access to recover the connection.

In an embodiment, performing the connection recovery with the terminal includes:
in a case where no secondary cell group is configured for the terminal or the secondary cell group configured for the terminal is unavailable, performing radio resource control restoration through a cell selected by the terminal to recover connection.

In an embodiment, in a case where no secondary cell group is configured for the terminal or the secondary cell group configured for the terminal is unavailable, the terminal may perform cell selection, and then the network device may perform the RRC restoration with the terminal through the cell selected by the terminal to recover the connection.

It should be noted that RRC restoration in this embodiment may be different from RRC restoration in related arts.

In an embodiment, performing the RRC restoration through the cell selected by the terminal includes:
in a case where the cell selected by the terminal is a candidate cell with a pre-configured radio resource control parameter, performing the connection recovery with the terminal on the candidate cell according to the radio resource control parameter.

In an embodiment, a candidate cell may be selected by the network device for the terminal according to a measurement result obtained by performing a measurement through a L3 and reported by the terminal before performing the at least one cell switch. The network device configures the RRC parameter of the candidate cell for the terminal.

In a case where the terminal performs cell selection and selects a candidate cell, the network device may perform the connection recovery with the terminal on the candidate cell according to the pre-configured RRC parameter of the candidate cell. Compared with the RRC restoration process in the related arts, since the RRC parameter of the candidate cell has been configured for the terminal by the network device before the terminal performs at least one cell selection, in this embodiment, the network device only needs to configure for the terminal with RRC parameters other than the pre-configured RRC parameter.

In an embodiment, performing the RRC restoration through the cell selected by the terminal includes:
instructing the terminal to perform the connection recovery on the cell selected according to a radio resource control parameter configured for a source cell; and
performing the connection recovery with the terminal on the cell selected according to the radio resource control parameter configured for the source cell.

In an embodiment, the network device may indicate the terminal to perform the connection recovery on the selected cell according to the RRC parameter configured to the source cell. Since the RRC parameter of the source cell has been configured to the terminal by the network device before the terminal performs the at least one cell selection, in this embodiment, the network device only needs to configure the terminal with RRC parameters other than the preconfigured RRC parameter. Accordingly, it is beneficial to simplifying a process of the network device configuring the RRC parameter for the terminal in the connection recovery process, and it is further beneficial to complete the connection recovery as soon as possible.

The embodiment shown in FIG. 9 may be implemented independently or on the basis of any of the previous embodiments. For example, based on the embodiment shown in FIG. 8, the embodiment shown in FIG. 9 may be implemented according to the following steps including:
in a case where a terminal has a failure of at least one cell switch and the secondary cell group is configured for the terminal, receiving at least one cell switch failure information sent by the terminal through a secondary cell group; and
controlling the terminal to perform connection recovery through the SCG.

Related embodiments may be described with reference to the previous descriptions, and each of the related embodiments may be implemented independently or in combination with other embodiments as required, which is not limited in the disclosure.

FIG. 10 is a schematic flowchart of a method for cell switch failure processing according to an embodiment of the disclosure. As illustrated in FIG. 10, performing the connection recovery with the terminal includes the following step.

At step S1001, a connection between a source cell and the terminal is maintained, and connection recovery is performed with the terminal through the source cell.

In an embodiment, the source cell may be one or more cells in at least one cell where the terminal is before performing the at least one cell switch.

For example, when the at least one cell includes an MCG, the source cell may be an MCG where the terminal is before performing the at least one cell switch, such as a PCell and a SCell in the MCG, or the source cell may be the PCell in the MCG where the terminal is before performing the at least one cell switch, or the source cell may be the SCell in the MCG where the terminal is before performing the at least one cell switch.

For example, when the at least one cell includes a PCell, the source cell may be the PCell where the terminal is before performing the at least one cell switch.

For example, when the at least one cell includes a PCell and at least one SCell, the source cell may be the PCell and a SCell in the PCell and the at least one SCell where the terminal is before performing the at least one cell switch, or the source cell may be the PCell in the PCell and the at least one SCell where the terminal is before performing the at least one cell switch, or the source cell may be a SCell in the PCell and the at least one SCell where the terminal is before performing the at least one cell switch.

After the terminal successfully performs the at least one cell switch, for example, after switching to a target cell, the target cell may send a feedback to the source cell to inform the source cell that the terminal has successfully switched to the target cell. The network device may maintain the connection between the source cell and the terminal before receiving the feedback from the target cell, so that the network device may perform the connection recovery with the terminal directly through the source cell in case of the failure of the at least one cell switch of the terminal. The network device may release the connection between the source cell and the terminal only after receiving the feedback from the target cell.

By maintaining the connection between the source cell and the terminal to enable the terminal to perform the connection recovery through the source cell, there is no need for RRC restoration in the process, which is convenient for the terminal to recover connection quickly.

In an embodiment, performing connection recovery with the terminal through the source cell includes:
receiving at least one cell switch failure information sent by the terminal through the source cell.

In an embodiment, when performing the connection recovery through the source cell, the terminal may first send the at least one cell switch failure information to the source cell, and the network device may receive the at least one cell switch failure information sent by the terminal through the source cell, so that the network device may determine that the terminal occurs the failure of the at least one cell switch and needs to access the source cell. Then the terminal may access the source cell and communicate on the source cell smoothly. There is no need for RRC reconstruction in the process.

In an embodiment, performing connection recovery with the terminal, includes:
in a case where the terminal accessing the source cell fails, performing radio resource control restoration through a cell selected by the terminal to recover connection.
the terminal needs to access the source cell in the case of performing the connection recovery through the source cell. For example, the terminal first sends the at least one cell switch failure information to the source cell, and the terminal may determine that its access to the source cell is successful in response to receiving a downlink transmission of a first cell in at least one cell. In response to failing to receive the downlink transmission of the first cell in the at least one cell, for example, failing to receive the downlink transmission of the first cell in the at least one cell within a fourth preset duration from a moment of sending the at least one cell switch failure information to the source cell, the terminal may determine that its access to the source cell has failed, and then the terminal may perform the cell selection and the network device may perform the RRC restoration with the terminal through the cell selected by the terminal to recover connection.

It should be noted that the first cell does not refer to a specific cell, but refers to any cell in at least one cell where the terminal is before performing the at least one cell switch.

It should be noted that RRC restoration in this embodiment may be different from RRC restoration in related arts.

In an embodiment, performing RRC restoration through the cell selected by the terminal includes:
in a case where the cell selected by the terminal is a candidate cell with a pre-configured radio resource control parameter, performing the connection recovery with the terminal on the candidate cell according to the radio resource control parameter.

In an embodiment, a candidate cell may be selected by the network device for the terminal according to a measurement result which is obtained by performing a measurement through a L3 and reported by the terminal before performing the at least one cell switch. The network device configures the RRC parameter of the candidate cell for the terminal.

In a case where the terminal performs the cell selection and selects a candidate cell, the network device performs connection recovery with the terminal on the candidate cell according to the pre-configured RRC parameter of the candidate cell. Compared with the RRC restoration process in the related arts, since the RRC parameter of the candidate cell has been configured for the terminal by the network device before the terminal performs at least one cell selection, in this embodiment, the network device only needs to configure the terminal with RRC parameters other than the pre-configured RRC parameter.

In an embodiment, performing the RRC restoration through the cell selected by the terminal, includes:
instructing the terminal to perform the connection recovery on the cell selected according to a radio resource control parameter configured for a source cell; and
performing the connection recovery with the terminal on the cell selected according to the radio resource control parameter configured for the source cell.

In an embodiment, the network device may indicate the terminal to perform the connection recovery on the selected cell according to the RRC parameter configured to the source cell. Since the RRC parameter of the source cell has been configured to the terminal by the network device before the terminal performs the at least one cell selection, in this embodiment, the network device only needs to configure the terminal with RRC parameters other than the pre-configured RRC parameter. Accordingly, it is beneficial to simplifying a process of the network device configuring the RRC parameter for the terminal in the connection recovery process, and it is further beneficial to complete the connection recovery as soon as possible.

The embodiment shown in FIG. 10 may be implemented independently or on the basis of any of the previous embodiments. For example, based on the embodiment shown in FIG. 8, the embodiment shown in FIG. 10 may be implemented according to the following step including:
in a case where a terminal has a failure of at least one cell switch, maintaining a connection between a source cell and the terminal, and performing connection recovery with the terminal through the source cell.

Related embodiments may be described with reference to the previous descriptions, and each of the related embodiments may be implemented independently or in combination with other embodiments as required, which is not limited in the disclosure.

FIG. 11 is a schematic flowchart of a method for cell switch failure processing according to an embodiment of the disclosure. As illustrated in FIG. 11, performing the connection recovery with the terminal includes the following step.

At step S1101, connection recovery is performed on a cell that meets an evaluation condition, the cell being determined by evaluating a plurality of predetermined cells through the terminal.

In an embodiment, before the at least one cell switch, the terminal may predetermine a plurality of cells, for example, the plurality of cells may be determined according to a protocol or according to a cell list configured by a network device. The terminal may evaluate the plurality of cells and determine the cell that meets the evaluation condition. After the failure of the at least one cell switch, the network device may perform the connection recovery with the terminal through the cell that meets the evaluation condition (for example, implemented based on the RRC restoration), and there is no necessary for the terminal to perform an operation of cell selection. Thus, it is beneficial to quickly completing the connection recovery.

The manner of evaluating the plurality of cells may be set as required, which is not limited in the disclosure. For example, this embodiment may be implemented based on the related embodiments on the terminal side, which will not be repeated herein.

In an embodiment, the plurality of predetermined cells include at least one of:
a source cell; and
a candidate cell with a pre-configured radio resource control parameter.

In an embodiment, in a case where the source cell meets the evaluation condition, since the RRC parameter of the source cell is known to the terminal, when the terminal performs the connection recovery through the source cell, the network device may not need to reconfigure the RRC parameter of the source cell for the terminal. Accordingly, it is beneficial to simplifying a process of the network device configuring the RRC parameter for the terminal in the connection recovery process, and it is beneficial to complete the connection recovery as soon as possible.

In an embodiment, in a case where the candidate cell meets the evaluation condition, the terminal performs the connection recovery through the candidate cell. The candidate cell may be selected by the network device for the terminal according to a measurement result which is obtained by performing a measurement through a L3 and reported by the terminal before performing the at least one cell switch. The network device configures the RRC parameter (such as a PDCCH resource, etc.) of the candidate cell for the terminal.

The terminal performs the at least one cell switch generally due to a relatively poor service quality of the source cell, therefor, after the failure of the at least one cell switch, the terminal may perform the connection recovery through the source cell, even though the source cell may not be a suitable cell. However, after the failure of the at least one cell switch, the terminal may perform the connection recovery by means of RRC restoration. Due to a need for the cell selection, it may take a long time, and may lead to a longer connection interruption.

According to this embodiment, the RRC parameter of the candidate cell has been configured for the terminal by the network device before the terminal performs at least one cell selection, therefore, for the candidate cell, the network device only needs to configure for the terminal with RRC parameters other than the pre-configured RRC parameter. Compared with performing the connection recovery through the source cell, it is beneficial to performing the connection recovery through a more suitable cell. Moreover, compared with performing the connection recovery through the RRC restoration, it is beneficial to simplifying a process of the network device configuring the RRC parameter for the terminal in the connection recovery process, and it is further beneficial to complete the connection recovery as soon as possible.

In an embodiment, performing connection recovery with the terminal includes:
in a case where a cell that meets the evaluation condition is absent, performing radio resource control restoration through a cell selected by the terminal to recover connection.

In an embodiment, when the terminal evaluates multiple cells, it is possible that none of the cells meet the evaluation condition. In such case, the terminal may perform the cell selection, and the network device may perform the RRC restoration through the cell selected by the terminal to recover the connection.

It should be noted that RRC restoration in this embodiment may be different from RRC restoration in related arts.

In an embodiment, performing the RRC restoration through the cell selected by the terminal includes:
in a case where the cell selected by the terminal is a candidate cell with a pre-configured radio resource control parameter, performing the connection recovery with the terminal on the candidate cell according to the radio resource control parameter.

In an embodiment, a candidate cell may be selected by the network device for the terminal according to a measurement result after the terminal performs a measurement through a L3 and reports the measurement result before performing the at least one cell switch. The network device configures the RRC parameter of the candidate cell for the terminal.

In a case where the terminal performs the cell selection and selects the candidate cell, the network device performs connection recovery with the terminal on the candidate cell according to the pre-configured RRC parameter of the candidate cell. Compared with the RRC restoration process in the related arts, since the RRC parameter of the candidate cell has been configured for the terminal by the network device before the terminal performs at least one cell selection, in this embodiment, the network device only needs to configure for the terminal with RRC parameters other than the pre-configured RRC parameter.

In an embodiment, performing the RRC restoration through the cell selected by the terminal includes:
instructing the terminal to perform the connection recovery on the cell selected according to a radio resource control parameter configured for a source cell; and
performing the connection recovery with the terminal on the cell selected according to the radio resource control parameter configured for the source cell.

In an embodiment, the network device may indicate the terminal to perform the connection recovery on the selected cell according to the RRC parameter configured to the source cell. Since the RRC parameter of the source cell has been configured to the terminal by the network device before the terminal performs the at least one cell selection, in this embodiment, the network device only needs to configure the terminal with RRC parameters other than the preconfigured RRC parameter, which is beneficial to simplifying a step for the network device to configure the RRC parameter for the terminal in the connection recovery process, so as to complete the connection recovery as soon as possible.

The embodiment shown in FIG. 11 may be implemented independently or on the basis of any of the previous embodiments. For example, based on the embodiment shown in FIG. 8, the embodiment shown in FIG. 11 may be implemented according to the following step including:
in a case where a terminal has a failure of at least one cell switch, performing the connection recovery through a cell that meets an evaluation condition, the cell being determined by evaluating a plurality of predetermined cells through the terminal.

Related embodiments may be described with reference to the previous descriptions, and each of the related embodiments may be implemented independently or in combination with other embodiments as required, which is not limited in the disclosure.

FIG. 12 is a schematic flowchart of a method for cell switch failure processing according to an embodiment of the disclosure. As illustrated in FIG. 12, performing the connection recovery with the terminal includes the following steps.

At step S1201, at least one cell switch command is sent to the terminal, in which the command is used to indicate a cell for connection recovery.

At step S1202, connection recovery is performed with the terminal through the cell for connection recovery.

In an embodiment, before the terminal performs the at least one cell switch, the network device may indicate a cell for connection recovery to the terminal, so that when the terminal performs the connection recovery after the at least one cell switch fails, there is no need to perform the cell selection. The network device may perform the connection recovery with the terminal through the cell for connection recovery indicated to the terminal. For example, the network device may indicate the cell for connection recovery in at least one cell switch command sent to the terminal.

In an embodiment, performing the connection recovery with the terminal includes:
in response to that a failure in performing connection recovery with the terminal through the cell for connection recovery, performing radio resource control restoration through a cell selected by the terminal to recover connection.

In an embodiment, the terminal needs to access a source cell in the case of performing the connection recovery through a cell for connection recovery indicated by the network device. For example, the terminal first sends at least one cell switch failure information to the cell for connection recovery, and the terminal may determine that its access to the cell for connection recovery is successful in response to receiving a downlink transmission of the cell for connection recovery. However, in response to failing to receive the downlink transmission of the cell for connection recovery, for example, failing to receive the downlink transmission of the cell for connection recovery within a fifth preset duration from a moment of sending the at least one cell switch failure information to the cell for connection recovery, the terminal may determine that its access to the cell for connection recovery has failed. Then, the terminal may perform the cell selection and the network device may perform the RRC restoration with the terminal through the cell selected by the terminal to recover the connection.

It should be noted that RRC restoration in this embodiment may be different from RRC restoration in related arts.

In an embodiment, performing the RRC restoration through the cell selected by the terminal includes:
in a case where the cell selected by the terminal is a candidate cell with a pre-configured radio resource control parameter, performing the connection recovery with the terminal on the candidate cell according to the radio resource control parameter.

In an embodiment, a candidate cell may be selected by the network device for the terminal according to a measurement result after the terminal performs a measurement through a L3 and reports the measurement result before performing the at least one cell switch. The network device configures the RRC parameter of the candidate cell for the terminal.

When the terminal performs the cell selection and selects a candidate cell, the network device may perform the connection recovery with the terminal on the candidate cell according to the pre-configured RRC parameter of the candidate cell. Compared with the RRC restoration process in the related arts, since the RRC parameter of the candidate cell has been configured for the terminal by the network device before the terminal performs at least one cell selection, in this embodiment, the network device only needs to configure for the terminal with RRC parameters other than the pre-configured RRC parameter.

In an embodiment, performing the RRC restoration through the cell selected by the terminal includes:
instructing the terminal to perform the connection recovery on the cell selected according to a radio resource control parameter configured for a source cell; and
performing the connection recovery with the terminal on the cell selected according to the radio resource control parameter configured for the source cell.

In an embodiment, the network device may indicate the terminal to perform the connection recovery on the selected cell according to the RRC parameter configured to the source cell. Since the RRC parameter of the source cell has been configured to the terminal by the network device before the terminal performs the at least one cell selection, in this embodiment, the network device only needs to configure the terminal with RRC parameters other than the preconfigured RRC parameter, which is beneficial to simplifying a step for the network device to configure the RRC parameter for the terminal in the connection recovery process, so as to complete the connection recovery as soon as possible.

The embodiment shown in FIG. 12 may be implemented independently or on the basis of any of the previous embodiments. For example, based on the embodiment shown in FIG. 8, the embodiment shown in FIG. 12 may be implemented according to the following steps including:
in a case where a terminal has a failure of at least one cell switch, sending at least one cell switch command to the terminal, in which the command is used to indicate a cell for connection recovery; and
performing connection recovery with the terminal through the cell for connection recovery.

Related embodiments may be described with reference to the previous descriptions, and each of the related embodiments may be implemented independently or in combination with other embodiments as required, which is not limited in the disclosure.

FIG. 13 is a schematic flowchart of a method for cell switch failure processing according to an embodiment of the disclosure. As illustrated in FIG. 13, performing the connection recovery with the terminal includes the following step.

At step S1301, RRC restoration is performed through a cell selected by the terminal to recover connection.

In an embodiment, when the network device performs the connection recovery with the terminal after determining that the terminal has the failure of the at least one cell switch, the network device may perform the RRC restoration with the terminal through a cell selected by the terminal with performing the cell selection to recover connection.

It should be noted that RRC restoration in the embodiments of the disclosure is different from RRC restoration in related arts, which will be explained by several embodiments.

In an embodiment, performing the RRC restoration through the cell selected by the terminal includes:
in a case where the cell selected by the terminal is a candidate cell with a pre-configured radio resource control parameter, performing the connection recovery with the terminal on the candidate cell according to the radio resource control parameter.

In an embodiment, a candidate cell may be selected by the network device for the terminal according to a measurement result after the terminal performs a measurement through a L3 and reports the measurement result before performing the at least one cell switch. The network device configures the RRC parameter of the candidate cell for the terminal.

When the terminal performs the cell selection and selects a candidate cell, the network device performs connection recovery with the terminal on the candidate cell according to the pre-configured RRC parameter of the candidate cell. Compared with the RRC restoration process in the related arts, since the RRC parameter of the candidate cell has been configured for the terminal by the network device before the terminal performs at least one cell selection, in this embodiment, the network device only needs to configure for the terminal with RRC parameters other than the pre-configured RRC parameter. Accordingly, it is beneficial to simplifying a process of the network device configuring the RRC parameter for the terminal in the connection recovery process, and it is further beneficial to complete the connection recovery as soon as possible.

The number of times, n, that the terminal attempts to perform the connection recovery through the candidate cell may be limited, for example, the number of times may be determined based on a protocol or indicated by the network device. In a case of failing to perform the connection recovery through the candidate cell, the terminal is allowed to perform the connection recovery through the candidate cell repeatedly up to a maximum of n. If the terminal still fails to perform the connection recovery at the n-th attempt, it may perform the connection recovery in other ways, so as to avoid slow connection recovery and waste of resources due to too many attempts.

In an embodiment, performing the RRC restoration through the cell selected by the terminal includes:
instructing the terminal to perform the connection recovery on the cell selected according to a radio resource control parameter configured for a source cell; and
performing the connection recovery with the terminal on the cell selected according to the radio resource control parameter configured for the source cell.

In an embodiment, the network device may indicate the terminal to perform the connection recovery on the selected cell according to the RRC parameter configured to the source cell. Since the RRC parameter of the source cell has been configured to the terminal by the network device before the terminal performs the at least one cell selection, in this embodiment, the network device only needs to configure the terminal with RRC parameters other than the preconfigured RRC parameter. Accordingly, it is beneficial to simplifying a process of the network device configuring the RRC parameter for the terminal in the connection recovery process, and it is further beneficial to complete the connection recovery as soon as possible.

The embodiment shown in FIG. 13 may be implemented independently or on the basis of any of the previous embodiments. For example, based on the embodiment shown in FIG. 8, the embodiment shown in FIG. 13 may be implemented according to the following step including:
in a case where a terminal has a failure of at least one cell switch, RRC restoration is performed through the cell selected by the terminal to recover connection.

Related embodiments may be described with reference to the previous descriptions, and each of the related embodiments may be implemented independently or in combination with other embodiments as required, which is not limited in the disclosure.

Corresponding to the aforementioned embodiments of the method for cell switch failure processing, the disclosure also provides embodiments of the corresponding apparatus for cell switch failure processing.

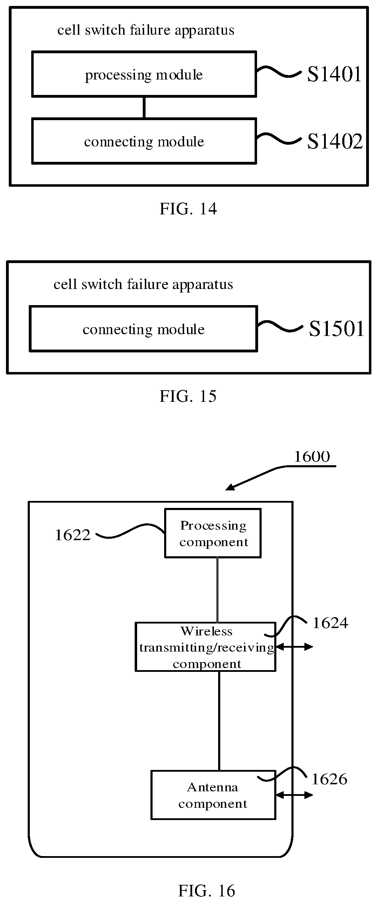

FIG. 14 is a schematic diagram of an apparatus for cell switch failure processing according to an embodiment of the disclosure. The apparatus in this embodiment may be a terminal or a device composed of modules in the terminal. The terminal includes, but is not limited to, communication devices such as a mobile phone, a tablet computer, a wearable device, a sensor, and an Internet of Things (IoT) device. The terminal can communicate with a network device. The network device includes, but is not limited to, network devices in 4th generation (4G), 5th generation (5G), 6th generation (6G) and other communication systems, such as a base station and a core network.

As illustrated in FIG. 14, the apparatus for cell switch failure processing includes:
a processing module 1401, configured to determine a failure of at least one cell switch; and
a connecting module 1402, configured to perform connection recovery.

In an embodiment, the processing module is configured to: determine the failure of the at least one cell switch in response to expiration of a timer associated with the at least one cell switch.

In an embodiment, an event that triggers the timer to start timing includes at least one of: receiving a switch command sent by a first cell in the at least one cell; sending, to the first cell, a feedback to the switch command; determining that a condition for triggering the at least one cell switch is met; or releasing a PCell in the at least one cell.

In an embodiment, in a case where the at least one cell switch is random access channel (RACH)-based switch, an event that triggers the timer to stop timing includes: successful RACH initiated to a target cell.

In an embodiment, in a case where the at least one cell switch is RACH-less switch, an event that triggers the timer to stop timing includes at least one of: receiving a downlink transmission sent by a target cell; receiving, from the target cell, downlink control information for scheduling a new transmission; or receiving feedback information indicating a successful access.

In an embodiment, the feedback information includes at least one of: an RRC layer signaling; a MAC layer signaling; or a physical layer signaling.

In an embodiment, the connecting module is further configured to: send at least one cell switch failure information to a secondary cell group in a case where the secondary cell group is present; and perform the connection recovery under control of the SCG.

In an embodiment, the connecting module is further configured to: in a case where the secondary cell group is absent, perform a cell selection, and perform radio resource control restoration through a selected cell to recover connection.

In an embodiment, the connecting module is further configured to: perform connection recovery through a source cell.

In an embodiment, the connecting module is further configured to: send at least one cell switch failure information to the source cell; and access the source cell.

In an embodiment, the connecting module is further configured to: in a case where accessing the source cell fails, perform a cell selection, and perform radio resource control restoration through a selected cell to recover connection.

In an embodiment, the processing module is further configured to: evaluate a plurality of predetermined cells; and determine a cell that meets an evaluation condition. The connecting module is further configured to: perform connection recovery through the cell that meets the evaluation condition.

In an embodiment, the plurality of predetermined cells include at least one of: a source cell; and a candidate cell with a pre-configured radio resource control parameter.

In an embodiment, the connecting module is further configured to: in a case where the cell that meets the evaluation condition is absent, perform a cell selection and perform radio resource control restoration through a selected cell to recover connection.

In an embodiment, the connecting module is further configured to: determine a cell for connection recovery indicated by a network device; and perform connection recovery through the cell for connection recovery.

In an embodiment, the connecting module is further configured to: in response to a failure in performing the connection recovery through the cell for connection recovery, perform a cell selection and performing radio resource control restoration through a selected cell to recover connection.

In an embodiment, the connecting module is further configured to: perform cell selection and perform RRC restoration through the selected cell to recover connection.

In an embodiment, the connecting module is further configured to: in a case where the selected cell is a candidate cell with a pre-configured radio resource control parameter, perform connection recovery on the candidate cell according to the RRC parameters.

In an embodiment, the connecting module is further configured to: perform the connection recovery on the selected cell according to a radio resource control parameter configured to a source cell, based on an indication of a network device.

In an embodiment, the at least one cell includes at least one of: an MCG; a PCell; or the PCell and at least one SCell.

FIG. 15 is a schematic diagram of an apparatus for cell switch failure processing according to an embodiment of the disclosure. The apparatus in this embodiment may be a network device or a device composed of modules in the network device. The network device can communicate with a terminal. The terminal includes, but is not limited to, communication devices such as a mobile phone, a tablet computer, a wearable device, a sensor, and an Internet of Things (IoT) device. The terminal can communicate with a network device. The network device includes, but is not limited to, network devices in 4th generation (4G), 5th generation (5G), 6th generation (6G) and other communication systems, such as a base station and a core network.

As illustrated in FIG. 15, the apparatus includes:
a connecting module 1501, configured to perform connection recovery with a terminal in a case where a terminal has a failure of at least one cell switch.

In an embodiment, the connecting module is further configured to: in a case where the secondary cell group is configured for the terminal, receive at least one cell switch failure information sent by the terminal through the SCG; and control the terminal to perform connection recovery through the SCG.

In an embodiment, the connecting module is further configured to: in a case where no secondary cell group is configured for the terminal or the secondary cell group configured for the terminal is unavailable, perform radio resource control restoration through a cell selected by the terminal to recover connection.

In an embodiment, the connecting module is further configured to: maintain a connection between a source cell and the terminal, and perform connection recovery with the terminal through the source cell.

In an embodiment, the connecting module is further configured to: receive at least one cell switch failure information sent by the terminal through the source cell.

In an embodiment, the connecting module is further configured to: in a case where the terminal accessing the source cell fails, perform RRC restoration through a cell selected by the terminal to recover connection.

In an embodiment, the connecting module is further configured to: perform the connection recovery through a cell that meets an evaluation condition, the cell being determined by evaluating a plurality of predetermined cells through the terminal.

In an embodiment, the plurality of predetermined cells include at least one of: a source cell; and a candidate cell with a pre-configured radio resource control parameter.

In an embodiment, the connecting module is further configured to: in a case where a cell that meets the evaluation condition is absent, perform RRC restoration through a cell selected by the terminal to recover connection.

In an embodiment, the apparatus further includes: a sending module. The sending module is configured to: send at least one cell switch command to the terminal, in which the command is used to indicate a cell for connection recovery. The connecting module is configured to: perform connection recovery with the terminal through the cell for connection recovery.

In an embodiment, the connecting module is further configured to: in response to that a failure in performing connection recovery with the terminal through the cell for connection recovery, perform RRC restoration through a cell selected by the terminal to recover connection.

In an embodiment, the connecting module is further configured to: perform RRC restoration through a cell selected by the terminal to recover connection.

In an embodiment, the connecting module is further configured to: in a case where the cell selected by the terminal is a candidate cell with a pre-configured radio resource control parameter, perform connection recovery with the terminal on the candidate cell according to the RRC parameters.

In an embodiment, the apparatus further includes: a sending module. The sending module is configured to: instruct the terminal to perform the connection recovery on the cell selected according to a radio resource control parameter configured for a source cell. The connecting module is further configured to: perform the connection recovery with the terminal on the cell selected according to the radio resource control parameter configured for the source cell.

In an embodiment, a timer-based cell switch failure recovery process will be introduced below.

### Cell switch failure detection:

In an embodiment, a new timer may be defined.

In an embodiment, a starting time of the timer may include at least one of the following four examples.

Option 1 is a time when a cell switch command is received.

Option 2 is a time when sending a cell switch command feedback (i.e. HARQ/MAC CE) to a source MCG.

Option 3 is a time when a cell switch trigger event (for user-triggered cell switch) is met.

Option 4 is a time after releasing a PCell.

### End time of the timer:

For RACH-based cell switch, the timer stops when:
receiving a successful RACH(Msg4/MsgB), that is, the user completes a random access procedure to a target cell.

For RACH-less cell switch, the timer stops in one of the following three situations:
Option 1: when a DL transmission of a target cell is received for the first time, specifically, receiving a PDCCH transmission scrambled with a C-RANTI of the user;
Option 2: when DCI for scheduling a new uplink or downlink transmission that scrambled by a C-RNTI of the user is received for the first time; and
Option 3: when explicit network feedback information is received, which may be a specific MAC CE or an RRC message. For the MAC CE, two types of formats may be adopted. Format 1 is a new defined MAC CE. Format 2 is a multiplexed contention resolution MAC CE, but all the values of the MAC CE are set to a predefined value, such as 1 or 0.

When the timer expires, it is considered that a cell switch failure has occurred.

In an embodiment, the cell switch failure recovery may be implemented based on at least one of the following modes.

In an embodiment, in a first mode, if the terminal has an available SCG and a network configures or a protocol agrees that the terminal reports an MCG failure to the SCG, the SCG can control the terminal to perform connection recovery. If there is an MCG failure and a SCG is unavailable, the following connection recovery method (i.e., a second mode) can be triggered.

In an embodiment, in the second mode, a user equipment (UE) performs cell selection and performs RRC restoration through the selected cell to recover connection, which mainly includes the following two cases.

Case 1: if the selected cell is a cell in a candidate configuration, connection recovery is performed through the candidate configuration, and the candidate configuration has been used for n times in the failure process.

Case 2: in the process of RRC restoration, a network can indicate whether to perform connection recovery through a configuration of a cell in a source MCG before a switch.

In an embodiment, in a third mode, a cell selection process is skipped and the connection recovery is performed directly through the source cell.

For the source cell, it is necessary to keep its connection with the user. The link between the user and the source cell will be released after the user has successfully accessed the target cell and a feedback is received from the target cell.

The user reports a failure to the source cell and directly accesses the source cell without RRC restoration.

If it fails to access the source cell, the user needs to select another cell and perform RRC restoration. That is, the second mode is carried out again.

In an embodiment, in a fourth mode, since the switch may be required due to the relatively poor service quality of the source cell, and the source cell may not be a suitable cell in the third mode. In the second mode, the cell selection is needed after the failure, resulting in a long interruption duration. Therefore, it is necessary to consider which cell to select in advance and once failure occurs, the RRC restoration can be carried out directly through the selected cell to recover the connection.

A cell list is configured for the user. By default, it contains candidate cells and serving cells. By evaluating the cells in the list, if a cell meets a certain condition, the corresponding cell can be regarded as a possible cell for recovery.

The evaluation method is using a beam average value Q of a cell to represent a channel condition of the cell. If Q is greater than a certain threshold T1, the cell is regarded as a candidate cell for recovery. If the candidate cell for recovery does not meet the condition in a certain measurement, the cell will be removed from the candidate cell for recovery. Or, according to a stipulation, a cell can be used as a candidate cell for recovery only if Q corresponding to a certain cell is greater than the threshold in N consecutive evaluations. However, if there are M consecutive evaluations and the Q of the cell is less than a certain threshold T2, the cell will be removed.

After a cell switch failure occurs, if there is a cell for recovery that meets the condition, connection can be recovered through the cell.

Or, if a TA of the cell is informed in advance by performing TA management, an access message is sent to the cell by reserved resources.

If there are multiple cells for recovery that meet the condition, the user can select one cell for recovery by itself.

If none of the cells meets the condition, cell selection is performed and connection recovery is performed. That is, the second mode is carried out again.

In an embodiment, in a fifth mode, the cell switch command indicates a plurality of cells, one as a target cell and the other as a candidate cell for recovery. If the cell switch fails, the connection recovery is performed through the cell. If the recovery fails, the cell selection is performed again and RRC restoration is performed.

It should be noted that the above-mentioned embodiments can be combined with each other as needed and a sequence of the embodiments can be adjusted.

With regard to the apparatus in the above embodiments, the specific way in which each module performs an operation has been described in detail in the related method embodiments, which will not be described in detail here.

The apparatus embodiments basically correspond to the method embodiments, the related contents can refer to part of the descriptions of the method embodiments. The above-described apparatus embodiments are merely schematic, the units described above as separate components may or may not be physically separated, and the components displayed as units may or may not be physical units, i.e., the components may be located in one area or may be distributed to multiple network modules. Some or all of these modules can be selected according to practical needs to achieve the purpose of the solution of the disclosure. Those skilled in the art can understand and implement the solution without inventive works.

An embodiment of the disclosure also provides a system for cell switch failure processing. The system includes: a terminal and a network device. The terminal is configured to implement the method for cell switch failure processing performed by the terminal in any of the above embodiments, and the network device is configured to implement the method for cell switch failure processing performed by the network device in any of the above embodiments.

An embodiment of the disclosure also provides a communication device. The communication device includes: a processor and a memory for storing a computer program. When the computer program is executed by the processor, the method for cell switch failure processing performed by the terminal as described in any of the above embodiments is implemented.

An embodiment of the disclosure also provides a communication device. The communication device includes: a processor and a memory for storing a computer program. When the computer program is executed by the processor, the method for cell switch failure processing performed by the network device as described in any of the above embodiments is implemented.

An embodiment of the disclosure also provides a computer readable storage medium for storing a computer program. When the computer program is executed by a processor, the method for cell switch failure processing performed by the terminal as described in any of the above embodiments is implemented.

An embodiment of the disclosure also provides a computer readable storage medium for storing a computer program. When the computer program is executed by a processor, the method for cell switch failure processing performed by the network device as described in any of the above embodiments is implemented.

FIG. 16 is a schematic diagram of a device 1600 used for cell switch failure processing according to an embodiment of the disclosure. The device 1600 may be provided as a base station. As illustrated in FIG. 16, the device 1600 includes a processing component 1622, a wireless transmitting/receiving component 1624, an antenna component 1626, and a signal processing portion specific to a radio interface. The processing component 1622 include one or more processors. One of the processors in the processing component 1622 may be configured to implement the steps in the method for cell switch failure processing performed by the network device as described in any of the above embodiments.

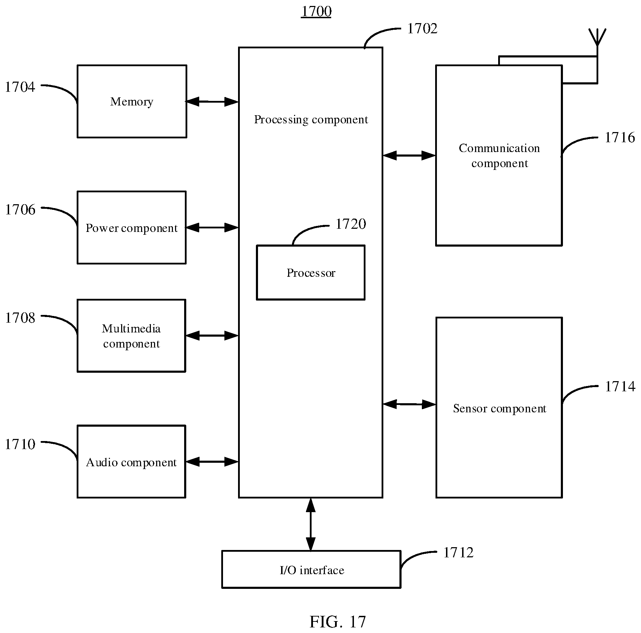

FIG. 17 is a schematic diagram of a device 1700 for cell switch failure processing according to an embodiment of the disclosure. For example, the device 1700 may be a mobile phone, a computer, a digital broadcasting terminal, a message transceiver device, a game console, a tablet device, a medical device, a fitness device and a personal digital assistant, etc.

As illustrated in FIG. 17, the device 1700 may include one or more of the following components: a processing component 1702, a memory 1704, a power component 1706, a multimedia component 1708, an audio component 1710, an input/output (I/O) interface 1712, a sensor component 1714, and a communication component 1716.

The processing component 1702 typically controls overall operations of the device 1700, such as the operations associated with display, telephone calls, data communications, camera operations, and recording operations. The processing component 1702 may include one or more processors 1720 to execute instructions to implement all or part of the steps in the above described method that is performed by the terminal. Moreover, the processing component 1702 may include one or more modules which facilitate the interaction between the processing component 1702 and other components. For example, the processing component 1702 may include a multimedia module to facilitate the interaction between the multimedia component 1708 and the processing component 1702.

The memory 1704 is configured to store various types of data to support the operation of the device 1700. Examples of such data include instructions for any applications or methods operated on the device 1700, contact data, phonebook data, messages, pictures, videos, etc. The memory 1704 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1706 provides power to various components of the device 1700. The power component 1706 may include a power management system, one or more power sources, and any other components associated with the generation, management, and distribution of power in the device 1700.

The multimedia component 1708 includes a screen providing an output interface between the device 1700 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 1708 includes a front-facing camera and/or a rear-facing camera. When the device 1700 is in an operating mode, such as a shooting mode or a video mode, the front-facing camera and/or the rear-facing camera can receive external multimedia data. Each front-facing camera and rear-facing camera may be a fixed optical lens system or has a focal length and optical zoom capability.

The audio component 1710 is configured to output and/or input audio signals. For example, the audio component 1710 includes a microphone (MIC) configured to receive an external audio signal when the device 1700 is in an operation mode, such as a call mode, a recording mode, and a voice recognition mode. The received audio signal may be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons may include, but are not limited to, a home button, a volume button, a starting button, and a locking button.

The sensor component 1714 includes one or more sensors to provide status assessments of various aspects of the device 1700. For instance, the sensor component 1714 may detect an open/closed status of the device 1700, relative positioning of components, e.g., the display and the keypad, of the device 1700, a change in position of the device 1700 or a component of the device 1700, a presence or absence of user contact with the device 1700, an orientation or an acceleration/deceleration of the device 1700, and a change in temperature of the device 1700. The sensor component 1714 may include a proximity sensor configured to detect the presence of nearby objects without any physical contact. The sensor component 1714 may also include a light sensor, such as a Complementary Metal Oxide Semiconductor (CMOS) or Charge-Coupled Device (CCD) image sensor, for use in imaging applications. In some embodiments, the sensor component 1714 may also include an accelerometer sensor, a gyroscope sensor, a magnetic sensor, a pressure sensor, or a temperature sensor.

The communication component 1716 is configured to facilitate communication, wired or wirelessly, between the device 1700 and other devices. The device 1700 can access a wireless network based on a communication standard, such as Wi-Fi, 2G or 3G, 4G LTE, 5G NR or a combination thereof. In an exemplary embodiment, the communication component 1716 receives a broadcast signal or broadcast associated information from an external broadcast management system via a broadcast channel. In an exemplary embodiment, the communication component 1716 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In an exemplary embodiment, the device 1700 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method that is performed by the terminal.

In an exemplary embodiment, there is also provided a non-transitory computer readable storage medium including instructions, such as the memory 1704. The above instructions may be executed by the processor 1720 in the device 1700, for performing the above method that is performed by the terminal. For example, the non-transitory computer readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. The disclosure is intended to cover any variations, usages, or adaptations of the embodiments of the disclosure following the general principles thereof and including such departures from the disclosure as come within known or customary practice in the art. It is intended that the specification and embodiments are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

It should be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations thereof are meant to cover non-exclusive including, so that the process, method, article or device comprising a series of elements do not only comprise those elements, but also comprise other elements that are not explicitly listed or also comprise the inherent elements of the process, method, article or device. In the case that there are no more restrictions, an element qualified by the statement "comprises a... " does not exclude the presence of additional identical elements in the process, method, article or device that comprises the said element.

The above detailed description of the methods and devices provided by the embodiments of the disclosure is provided herein, and specific examples are used herein to illustrate the principles and implementations of the disclosure, and the above illustrations of the embodiments are only used to assist in the understanding of the methods of the disclosure and the core ideas thereof. Meanwhile, for those skilled in the art, based on the ideas of the disclosure, there will be changes in the specific implementations and the usage scope, and in conclusion, the contents of the specification should not be construed as a limitation on the disclosure.

## Claims

1. A method for cell switch failure processing, performed by a terminal, comprising:
determining a failure of at least one cell switch; and
performing connection recovery.

2. The method of claim 1, wherein determining the failure of the at least one cell switch comprises:
determining the failure of the at least one cell switch in response to expiration of a timer associated with the at least one cell switch.

3. The method of claim 2, wherein an event that triggers the timer to start timing comprises at least one of:
receiving a switch command sent by a first cell in at least one cell;
sending, to the first cell, a feedback to the switch command;
determining that a condition for triggering the at least one cell switch is met; or
releasing a primary cell in the at least one cell.

4. The method of claim 2, wherein in a case where the at least one cell switch is random access channel (RACH)-based switch, an event that triggers the timer to stop timing comprises:
successful RACH initiated to a target cell.

5. The method of claim 2, wherein in a case where the at least one cell switch is RACH-less switch, an event that triggers the timer to stop timing comprises at least one of:
receiving a downlink transmission sent by a target cell;
receiving, from the target cell, downlink control information for scheduling a new transmission; or
receiving feedback information indicating a successful access.

6. The method of claim 5, wherein the feedback information comprises at least one of:
a radio resource control layer signaling;
a media access control layer signaling; or
a physical layer signaling.

7. The method of any one of claims 1-6, wherein performing the connection recovery comprises:
sending at least one cell switch failure information to a secondary cell group in a case where the secondary cell group is present; and
performing the connection recovery under control of the secondary cell group.

8. The method of claim 7, wherein performing the connection recovery further comprises:
in a case where the secondary cell group is absent, performing a cell selection, and performing radio resource control restoration through a selected cell to recover connection.

9. The method of any one of claims 1-6, wherein performing the connection recovery further comprises:
performing the connection recovery through a source cell.

10. The method of claim 9, wherein performing the connection recovery through the source cell comprises:
sending at least one cell switch failure information to the source cell; and
accessing the source cell.

11. The method of claim 10, wherein performing the connection recovery further comprises:
in a case where accessing the source cell fails, performing a cell selection, and performing radio resource control restoration through a selected cell to recover connection.

12. The method of any one of claims 1-6, further comprising:
evaluating a plurality of predetermined cells; and
determining a cell that meets an evaluation condition;
wherein performing the connection recovery comprises:
performing the connection recovery through the cell that meets the evaluation condition.

13. The method of claim 12, wherein the plurality of predetermined cells comprise at least one of:
a source cell; or
a candidate cell with a pre-configured radio resource control parameter.

14. The method of claim 12, wherein performing the connection recovery further comprises:
in a case where the cell that meets the evaluation condition is absent, performing a cell selection and performing radio resource control restoration through a selected cell to recover connection.

15. The method of any one of claims 1-6, wherein performing the connection recovery further comprises:
determining a cell for connection recovery indicated by a network device; and
performing the connection recovery through the cell for connection recovery.

16. The method of claim 15, wherein performing the connection recovery further comprises:
in response to a failure in performing the connection recovery through the cell for connection recovery, performing a cell selection and performing radio resource control restoration through a selected cell to recover connection.

17. The method of any one of claims 1-6, wherein performing the connection recovery further comprises:
performing a cell selection and performing radio resource control restoration through a selected cell to recover connection.

18. The method of claim 17, wherein performing the radio resource control restoration through the selected cell to recover connection comprises:
in a case where the selected cell is a candidate cell with a pre-configured radio resource control parameter, performing the connection recovery on the candidate cell according to the radio resource control parameter.

19. The method of claim 17, wherein performing the radio resource control restoration through the selected cell to recover connection comprises:
performing the connection recovery on the selected cell according to a radio resource control parameter configured to a source cell, based on an indication of a network device.

20. The method of any one of claims 1-6, wherein at least one cell comprises at least one of:
a master cell group;
a primary cell; or
the primary cell and at least one secondary cell.

21. A method for cell switch failure processing, performed by a network device, comprising:
performing connection recovery with a terminal in a case where a terminal has a failure of at least one cell switch.

22. The method of claim 21, wherein performing the connection recovery with the terminal comprises:
in a case where the secondary cell group is configured for the terminal, receiving at least one cell switch failure information sent by the terminal through a secondary cell group; and
controlling the terminal to perform the connection recovery through the secondary cell group.

23. The method of claim 22, wherein performing the connection recovery with the terminal comprises:
in a case where no secondary cell group is configured for the terminal or the secondary cell group configured for the terminal is unavailable, performing radio resource control restoration through a cell selected by the terminal to recover connection.

24. The method of claim 21, wherein performing the connection recovery with the terminal comprises:
maintaining a connection between a source cell and the terminal, and performing the connection recovery with the terminal through the source cell.

25. The method of claim 24, wherein performing the connection recovery with the terminal through the source cell comprises:
receiving at least one cell switch failure information sent by the terminal through the source cell.

26. The method of claim 25, wherein performing the connection recovery with the terminal comprises:
in a case where the terminal accessing the source cell fails, performing radio resource control restoration through a cell selected by the terminal to recover connection.

27. The method of claim 21, wherein performing the connection recovery with the terminal comprises:
performing the connection recovery through a cell that meets an evaluation condition, the cell being determined by evaluating a plurality of predetermined cells through the terminal.

28. The method of claim 27, wherein the plurality of predetermined cells comprise at least one of:
a source cell; or
a candidate cell with a pre-configured radio resource control parameter.

29. The method of claim 27, wherein performing the connection recovery with the terminal comprises:
in a case where a cell that meets the evaluation condition is absent, performing radio resource control restoration through a cell selected by the terminal to recover connection.

30. The method of claim 21, wherein performing the connection recovery with the terminal comprises:
sending at least one cell switch command to the terminal, wherein the command is used to indicate a cell for connection recovery; and
performing the connection recovery with the terminal through the cell for connection recovery.

31. The method of claim 30, wherein performing the connection recovery with the terminal comprises:
in response to that a failure in performing connection recovery with the terminal through the cell for connection recovery, performing radio resource control restoration through a cell selected by the terminal to recover connection.

32. The method of claim 21, wherein performing the connection recovery with the terminal comprises:
performing radio resource control restoration through a cell selected by the terminal to recover connection.

33. The method of claim 32, wherein performing the radio resource control restoration through the cell selected by the terminal comprises:
in a case where the cell selected by the terminal is a candidate cell with a pre-configured radio resource control parameter, performing the connection recovery with the terminal on the candidate cell according to the radio resource control parameter.

34. The method of claim 32, wherein performing the radio resource control restoration through the cell selected by the terminal comprises:
instructing the terminal to perform the connection recovery on the cell selected according to a radio resource control parameter configured for a source cell; and
performing the connection recovery with the terminal on the cell selected according to the radio resource control parameter configured for the source cell.

35. The method of any one of claims 21-34, wherein at least one cell comprises at least one of:
a master cell group;
a primary cell; or
the primary cell and at least one secondary cell.

36. An apparatus for cell switch failure processing, comprising:
a processing module, configured to determine a failure of at least one cell switch; and
a connection module, configured to perform connection recovery.

37. An apparatus for cell switch failure processing, comprising:
a connection module, configured to perform connection recovery with a terminal in a case where the terminal has a failure of at least one cell switch.

38. A system for cell switch failure processing, comprising a terminal and a network device, wherein the terminal is configured to implement the method for cell switch failure processing according to any one of claims 1-20, and the network device is configured to implement the method for cell switch failure processing according to any one of claims 21-35.

39. A communication device, comprising:
a processor; and
a memory for storing a computer program;
wherein when the computer program is executed by the processor, the method for cell switch failure processing according to any one of claims 1-20 is implemented.

40. A communication device, comprising:
a processor; and
a memory for storing a computer program;
wherein when the computer program is executed by the processor, the method for cell switch failure processing according to any one of claims 21-35 is implemented.

41. A computer readable storage medium for storing a computer program, wherein when the computer program is executed by a processor, the method for cell switch failure processing according to any one of claims 1-20 is implemented.

42. A computer readable storage medium for storing a computer program, wherein when the computer program is executed by a processor, the method for cell switch failure processing according to any one of claims 22-35 is implemented.
